(19) Europäisches Patentamt
European Patent Office
Office européen des brevets

(11) **EP 3 896 036 A1**

(12) **EUROPEAN PATENT APPLICATION**
published in accordance with Art. 153(4) EPC

(43) Date of publication:
**20.10.2021 Bulletin 2021/42**

(21) Application number: **19896210.2**

(22) Date of filing: **27.11.2019**

(51) Int Cl.:
**C01B 39/48** $^{(2006.01)}$

(86) International application number:
**PCT/JP2019/046334**

(87) International publication number:
**WO 2020/121812 (18.06.2020 Gazette 2020/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2018 JP 2018233264**
**18.06.2019 JP 2019113138**

(71) Applicant: **The University of Tokyo**
**Bunkyo-ku,**
**Tokyo 113-8654 (JP)**

(72) Inventors:
• **WAKIHARA Toru**
**Tokyo 113-8654 (JP)**
• **IYOKI Kenta**
**Tokyo 113-8654 (JP)**
• **ONISHI Takako**
**Tokyo 113-8654 (JP)**
• **KIKUMASA Kakeru**
**Tokyo 113-8654 (JP)**

(74) Representative: **ABG Intellectual Property Law, S.L.**
**Avenida de Burgos, 16D**
**Edificio Euromor**
**28036 Madrid (ES)**

(54) **ZEOLITE AND MANUFACTURING METHOD THEREFOR**

(57) Provided are a zeolite with increased hydrothermal durability and a method of manufacturing the same. One aspect of the present invention provides a method of producing the zeolite, comprising the steps of: preparing a raw material zeolite (excluding FAU-type zeolite material) containing at least Si but not Al in the framework or having a Si/Al atomic ratio of 50 or more, and bringing the zeolite material into contact with a solution containing fluoride ions or with hot water at a temperature of 50°C or more and 250°C or less.

FIG.4

**Description**

CROSS-REFERENCE TO RELATED APPLICATIONS

The present application enjoys the benefit of priority to the prior Japanese Patent Applications No. 2018-233264 (filed on December 13, 2018) and No. 2019-113138 (filed on June 18, 2019), the entire disclosure of which is incorporated herein by reference.

TECHNICAL FIELD

The present invention relates to a zeolite and a method of manufacturing the same.

BACKGROUND ART

Zeolites containing silicon and aluminium as metalloid and/or metal elements in the framework (such as MFI-type and *BEA-type zeolites) are conventionally known. Such zeolites containing silicon and aluminium are widely used as, for example, adsorbing agents or catalysts in industries.
A technique by adding a fluoride to the synthesis of zeolites is known for obtaining high-silica-content zeolites (see, for example, Non-Patent Document 1). Also, a technique by using a fluoride in the post-treatment is known for increasing the pore volume (see Non-Patent Document 2). Moreover, a technique by heating zeolites at a temperature of 500°C to 700°C under a water vapor atmosphere is known as a technique to increase the durability of zeolites (see, for example, Patent Document 1).

PRIOR ART DOCUMENTS

Patent Document

Patent Document 1: WO 2010/016338

Non-Patent Documents

Non-Patent Document 1: M. A. Camblor, L. A. Villaescusa, M. J. Diaz-Cabanas, Top. Catal., 1999, 9:59-76.
Non-Patent Document 2: "Opening the Cages of Faujasite-Type Zeolite," J. Am. Chem. Soc., 2017, 139 (48): pp 17273-17276.

SUMMARY OF THE INVENTION

Currently marketed zeolites show low hydrothermal durability. Specifically, crystallinity is significantly reduced in zeolites after a hydrothermal durability test under an atmosphere containing 10% water vapor by volume, as compared to those before the hydrothermal durability test. Thus, there is a demand to develop zeolites with high hydrothermal durability. However, the increase in hydrothermal durability achieved by each of the techniques disclosed in Patent Document 1 and Non-Patent Documents 1 and 2 is less significant.
The present invention is completed to solve the above problem. That is, an object of the invention is to provide a zeolite with increased hydrothermal durability and a method of manufacturing the zeolite.
The present invention includes the following items.

[1] A zeolite containing at least Si in the framework, wherein the zeolite has a relative crystallinity (900°C) of 20% or more, which is the crystallinity ratio of the zeolite after to before heating the zeolite at 900°C for 3 hours under an atmosphere containing 10% water vapor by volume, and the zeolite before heating has a water absorption ratio of 6.0% by weight or less in an environment with a temperature of 25°C and a relative water vapor pressure of 0.4.
[2] The zeolite according to [1], wherein the zeolite is an MFI-type zeolite, a *BEA-type zeolite, or an MOR-type zeolite.
[3] An MFI-type zeolite containing at least Si but not Al in the framework or having a Si/Al atomic ratio of 50 or more, wherein the zeolite has a relative crystallinity (1050°C) of 20% or more, which is the crystallinity ratio of the zeolite after to before heating the zeolite at 1050°C for 3 hours under an atmosphere containing 10% water vapor by volume.
[4] A *BEA-type zeolite containing at least Si but not Al in the framework or having a Si/Al atomic ratio of 50 or more, wherein the zeolite has a relative crystallinity (1100°C) of 20% or more, which is the crystallinity ratio of the zeolite after to before heating the zeolite at 1100°C for 3 hours under an atmosphere containing 10% water vapor by volume.

[5] An MOR-type zeolite containing at least Si but not Al in the framework or having a Si/Al atomic ratio of 50 or more, wherein the zeolite has a relative crystallinity value (900°C) of 20% or more, which is the crystallinity ratio of the zeolite after to before heating the zeolite at 900°C for 3 hours under an atmosphere containing 10% water vapor by volume.

[6] The zeolite according to any one of [3] to [5], wherein the zeolite before heating has a water absorption ratio of 6.0% by weight or less in an environment with a temperature of 25°C and a relative water vapor pressure of 0.4.

[7] The zeolite according to any one of [1] to [6], wherein the zeolite contains fluorine in pores.

[8] The zeolite according to any one of [1] to [7], wherein the zeolite contains an organic structure-directing agent in pores.

[9] A method of manufacturing zeolite, comprising the steps of: preparing a raw material zeolite (excluding FAU-type zeolite material) containing at least Si but not Al in the framework or having a Si/Al atomic ratio of 50 or more, and bringing the raw material zeolite into contact with a solution containing fluoride ions or with hot water at a temperature of 50°C or more and 250°C or less.

[10] The method according to [9], further comprising a step in which the raw material zeolite is pulverized before the raw material zeolite is brought into contact with the solution containing fluoride ions or with the hot water.

[11] The method according to [9] or [10], wherein the raw material zeolite is brought into contact with the solution containing fluoride ions in the presence of an organic structure-directing agent.

[12] The method according to any one of [9] to [11], wherein the concentration of the fluoride ions in the solution is 0.001% by mass or more.

[13] The method according to [9], wherein the zeolite material is in contact with the hot water for a period of 1 hour or more.

By this invention, a zeolite with increased hydrothermal durability and a zeolite manufacturing method capable of producing such a zeolite can be provided.

BRIEF DESCRIPTION OF THE DRAWINGS

Fig. 1 shows X-ray diffraction patterns of a zeolite according to Example 1 before and after hydrothermal durability tests.

Fig. 2 shows X-ray diffraction patterns of a zeolite according to Example 2 before and after hydrothermal durability tests.

Fig. 3 shows X-ray diffraction patterns of a zeolite according to Comparative Example 1 before and after hydrothermal durability tests.

Fig. 4 depicts a graph showing the relative crystallinity of zeolites according to Examples 1 and 2 and Comparative Example 1 after hydrothermal durability tests.

Fig. 5 shows X-ray diffraction patterns of a zeolite according to Example 3 before and after hydrothermal durability tests.

Fig. 6 shows X-ray diffraction patterns of a zeolite according to Example 4 before and after hydrothermal durability tests.

Fig. 7 shows X-ray diffraction patterns of a zeolite according to Comparative Example 2 before and after hydrothermal durability tests.

Fig. 8 depicts a graph showing the relative crystallinity of zeolites according to Examples 3 and 4 and Comparative Example 2 after hydrothermal durability tests.

Fig. 9 shows X-ray diffraction patterns of a zeolite according to Example 5 before and after hydrothermal durability tests.

Fig. 10 shows X-ray diffraction patterns of a zeolite according to Example 6 before and after hydrothermal durability tests.

Fig. 11 shows X-ray diffraction patterns of a zeolite according to Comparative Example 3 before and after hydrothermal durability tests.

Fig. 12 depicts a graph showing the relative crystallinity of zeolites according to Examples 5 and 6 and Comparative Example 3 after hydrothermal durability tests.

Fig. 13 shows X-ray diffraction patterns of a zeolite according to Example 7 before and after hydrothermal durability tests.

Fig. 14 shows X-ray diffraction patterns of a zeolite according to Example 8 before and after hydrothermal durability tests.

Fig. 15 shows X-ray diffraction patterns of a zeolite according to Comparative Example 4 before and after hydrothermal durability tests.

Fig. 16 depicts a graph showing the relative crystallinity of zeolites according to Examples 7 and 8 and Comparative Example 4 after hydrothermal durability tests.

Fig. 17 (A) depicts a graph showing the relative crystallinity of zeolites according to Comparative Examples 5 to 7 after hydrothermal durability tests and Fig. 17 (B) depicts a graph showing the relative crystallinity of zeolites according to Comparative Examples 8 to 10 after hydrothermal durability tests.

Fig. 18 shows X-ray diffraction patterns of zeolites according to Examples 9 to 13 before a hydrothermal durability test.

Fig. 19 depicts a graph showing the crystallinity of zeolites according to Examples 9 to 13 before and after a hydrothermal durability test.

Fig. 20 depicts a graph showing the relative crystallinity of zeolites according to Examples 1, 2, and 14 to 17 after a hydrothermal durability test (900°C).

Fig. 21 depicts a graph showing the relative crystallinity of zeolites according to Examples 18 to 21 after a hydrothermal durability test (900°C).

Fig. 22 depicts a graph showing the relative crystallinity of zeolites according to Examples 3, 4, and 22 to 25 after a hydrothermal durability test (1050°C).

Fig. 23 shows X-ray diffraction patterns of zeolites according to Examples 26 and 27 before and after a hydrothermal durability test.

Fig. 24 shows X-ray diffraction patterns of a zeolite according to Example 28 before and after hydrothermal durability tests.

Fig. 25 shows X-ray diffraction patterns of a zeolite according to Example 29 before and after hydrothermal durability tests.

Fig. 26 depicts a graph showing the relative crystallinity of zeolites according to Examples 28 and 29 after hydrothermal durability tests.

Fig. 27 (A) shows an X-ray diffraction pattern of a zeolite according to Example 30 before a hydrothermal durability test and Fig. 27 (B) shows an X-ray diffraction pattern of the zeolite after the hydrothermal durability test.

Fig. 28 depicts a graph showing the relative crystallinity of a zeolite according to Example 31 after hydrothermal durability tests.

Fig. 29 shows X-ray diffraction patterns of zeolites according to Comparative Examples 11 to 13 before and after a hydrothermal durability test.

Fig. 30 depicts a graph showing the relative crystallinity of zeolites according to Examples 27 and 29 and Comparative Examples 11 to 13 after hydrothermal durability tests.

Fig. 31 depicts a graph showing the relative crystallinity of zeolites according to Example 32 and Comparative Example 14 after hydrothermal durability tests.

Fig. 32 depicts a graph showing the crystallinity of zeolites according to Examples 33 and 34 and Comparative Example 1 before and after hydrothermal durability tests.

Fig. 33 depicts a graph showing the relative crystallinity of a zeolite according to Example 35 after hydrothermal durability tests.

Fig. 34 depicts a graph showing the crystallinity of zeolites according to Example 36 and Comparative Example 2 before and after hydrothermal durability tests.

Fig. 35 depicts a graph showing the crystallinity of zeolites according to Example 37 and Comparative Example 4 before and after a hydrothermal durability test.

Fig. 36 (A) depicts a graph showing the crystallinity of zeolites according to Comparative Examples 7 and 15 before and after hydrothermal durability tests and Fig. 36 (B) depicts a graph showing those of zeolites according to Comparative Examples 10 and 16 before and after hydrothermal durability tests.

DESCRIPTION OF EMBODIMENTS

Zeolites and a zeolite manufacturing method according to embodiments of the present invention will be described below.

<<<Zeolite>>>

The zeolites are those containing at least Si in the framework (excluding, however, FAU-type zeolites). The zeolites are those except for FAU-type zeolites and are preferably MFI-type, *BEA-type, or MOR-type zeolites because, among others, MFI-type, *BEA-type, and MOR-type zeolites show high hydrothermal durability. The MFI-type, *BEA-type, and MOR-type zeolites are zeolites with a crystal structure selected from MFI structure, *BEA structure, or MOR structure, which are represented by structure-type codes assigned by the Structure Commission of the International Zeolite Association. FAU-type zeolites are excluded because this type of zeolites fail to effectively increase the hydrothermal durability. Whether a zeolite has a FAU structure, an MFI structure, a *BEA structure, or an MOR structure can be determined by comparing a powder X-ray diffraction analysis result from the zeolite with the powder X-ray diffraction patterns of FAU-type, MFI-type, *BEA-type, or MOR-type zeolites.

Preferably, the zeolites contain no Al, or contain Al in a Si/Al atomic ratio of 50 or more. In cases where a zeolite contains no Al, or contains Al in a Si/Al atomic ratio of 50 or more, the hydrothermal durability can be effectively increased. The lower limit of the Si/Al atomic ratio in the above zeolites is preferably more than 50, more preferably 80 or more. The upper limit of the Si/Al atomic ratio in the zeolites is not specifically limited but is preferably 5000 or less, more preferably 2000 or less, still more preferably 1000 or less, though zeolites with a Si/Al atomic ratio of, for example, infinity, that is those composed of nearly only $SiO_2$, are also effective.

In cases where the above zeolite is heated at 900°C for 3 hours under an atmosphere containing 10% water vapor by volume in a hydrothermal durability test (this hydrothermal durability test is hereinafter referred to as "hydrothermal durability test (900°C)"), the relative crystallinity (900°C) of the zeolite after the hydrothermal durability test (900°C) is preferably 20% or more. The "relative crystallinity" as used herein means a relative crystallinity where the crystallinity value of a zeolite before heating (before the hydrothermal durability test) is defined as 100%. The relative crystallinity of the zeolite after the hydrothermal durability test (900°C) is more preferably 30% or more, still more preferably 40% or more.

The water absorption ratio of the above zeolite before a hydrothermal durability test is preferably measured to be 6.0% by weight or less in an environment with a temperature of 25°C and a relative water vapor pressure of 0.4. In cases where the water absorption ratio is 6.0% by weight or less, the zeolite can have excellent hydrophobicity. In cases where the above zeolite is an MFI-type zeolite, the above water absorption ratio is more preferably 3.0% by weight or less, still more preferably 2.5% or less, from the viewpoint of achieving excellent hydrophobicity. Additionally, in cases where the above zeolite is a *BEA-type zeolite, the above water absorption ratio is more preferably 4.0% by weight or less from the viewpoint of achieving excellent hydrophobicity. The "relative water vapor pressure" as used herein means the ratio (P/P0) of the water vapor pressure under adsorption equilibrium (adsorption equilibrium pressure), P (mmHg), to the saturated water vapor pressure P0 (mmHg). The above water absorption ratio can be measured using a vapor sorption volumetric analyzer (product name: "VSTA"; manufactured by Anton Paar GmbH) in the environment at 25°C.

In cases where the above zeolite is an MFI-type zeolite containing no Al in the framework or containing Al in a Si/Al atomic ratio of 50 or more, and the MFI-type zeolite is heated at 900°C for 3 hours under an atmosphere containing 10% water vapor by volume in a hydrothermal durability test (900°C), the relative crystallinity (900°C) of the MFI-type zeolite after the hydrothermal durability test (900°C) is preferably 30% or more. The relative crystallinity of the MFI-type zeolite after the hydrothermal durability test (900°C) is more preferably 50% or more, still more preferably 70% or more.

Additionally, in cases where the MFI-type zeolite is heated at 1050°C for 3 hours under an atmosphere containing 10% water vapor by volume in a hydrothermal durability test (this hydrothermal durability test is hereinafter referred to as "hydrothermal durability test (1050°C)"), the relative crystallinity (1050°C) of the MFI-type zeolite after the hydrothermal durability test (1050°C) is preferably 20% or more. The relative crystallinity of the MFI-type zeolite after the hydrothermal durability test (1050°C) is more preferably 40% or more, still more preferably 60% or more.

Furthermore, in cases where the MFI-type zeolites is heated at 1150°C for 3 hours under an atmosphere containing 10% water vapor by volume in a hydrothermal durability test (this hydrothermal durability test is hereinafter referred to as "hydrothermal durability test (1150°C)"), the relative crystallinity value (1150°C) of the MFI-type zeolite after the hydrothermal durability test (1150°C) is preferably 10% or more. The relative crystallinity value of the MFI-type zeolite after the hydrothermal durability test (1150°C) is more preferably 30% or more, still more preferably 50% or more.

In cases where the above zeolite is an MFI-type zeolite containing no Al in the framework or containing Al in a Si/Al atomic ratio of 50 or more, the micropore volume maintenance rate (900°C) is preferably 90% or more, which is the ratio of micropore volume in the zeolite after to before a hydrothermal durability test (900°C). Zeolites tend to significantly reduce the micropore volume during a hydrothermal durability test (900°C). This means that collapse of structure is induced in the zeolites by the hydrothermal durability test (900°C). In contrast, in the MFI-type zeolite of the invention, the micropore volume maintenance rate (900°C) can be 90% or more, and the micropores of the zeolite are preserved even after the hydrothermal durability test (900°C), which is indicative of successful production of a zeolite with resistance to collapse of structure. Moreover, for the same reason as described above, the micropore volume maintenance rate (1050°C), which is the ratio of micropore volume in the zeolite after to before a hydrothermal durability test (1050°C), is more preferably 85% or more, and the micropore volume maintenance rate (1150°C), which is the ratio of micropore volume in the zeolite after to before a hydrothermal durability test (1150°C), is more preferably 70% or more. The above-described micropore volume is a value calculated by the t-plot method.

The micropore volume maintenance rate can be determined by the following equation (1), where A represents the micropore volume maintenance rate (%), and B represents the micropore volume ($cm^3/g$) of a zeolite before a hydrothermal durability test, and C represents the micropore volume ($cm^3/g$) of the zeolite after the hydrothermal durability test:

$$A = (C/B) \times 100 \qquad\qquad (1).$$

In cases where the above zeolite is a *BEA-type zeolite containing no Al in the framework or containing Al in a Si/Al atomic ratio of 50 or more, and the *BEA-type zeolite is heated at 1050°C for 3 hours under an atmosphere containing 10% water vapor by volume in a hydrothermal durability test (1050°C), the relative crystallinity (1050°C) of the *BEA-type zeolite after the hydrothermal durability test (1050°C) is preferably 60% or more. The relative crystallinity (1050°C) of the *BEA-type zeolite after the hydrothermal durability test (1050°C) is more preferably 70% or more, still more preferably 80% or more.

Additionally, in cases where the *BEA-type zeolite is heated at 1100°C for 3 hours under an atmosphere containing 10% water vapor by volume in a hydrothermal durability test (1100°C), the relative crystallinity (1100°C) of the *BEA-type zeolite after the hydrothermal durability test (1100°C) is preferably 20% or more. The relative crystallinity value (1100°C) of the *BEA-type zeolite after the hydrothermal durability test (1100°C) is more preferably 30% or more, still more preferably 50% or more.

Furthermore, in cases where the *BEA-type zeolite is heated at 1150°C for 3 hours under an atmosphere containing 10% water vapor by volume in a hydrothermal durability test (1150°C), the relative crystallinity (1150°C) of the *BEA-type zeolite after the hydrothermal durability test (1150°C) is more preferably 10% or more. The relative crystallinity (1150°C) of the *BEA-type zeolite after the hydrothermal durability test (1150°C) is more preferably 20% or more, still more preferably 30% or more.

In cases where the above zeolite is a *BEA-type zeolite containing no Al in the framework or containing Al in a Si/Al atomic ratio of 50 or more, the micropore volume maintenance rate (1050°C), which is the ratio of micropore volume in the zeolite after to before a hydrothermal durability test (1050°C), is preferably 90% or more, for the same reason as described for the MFI-type zeolite. Moreover, the micropore volume maintenance rate (1100°C), which is the ratio of micropore volume of the zeolite after to before a hydrothermal durability test (1100°C), is preferably 85% or more, and the micropore volume maintenance rate (1150°C), which is the ratio of micropore volume in the zeolite after to before a hydrothermal durability test (1150°C), is preferably 70% or more.

In cases where the above zeolite is an MOR-type zeolite containing no Al in the framework or containing Al in a Si/Al atomic ratio of 50 or more, and the MOR-type zeolite is heated at 900°C for 3 hours under an atmosphere containing 10% water vapor by volume in a hydrothermal durability test (900°C), the relative crystallinity of the MOR-type zeolite after the hydrothermal durability test (900°C) is preferably 20% or more. The relative crystallinity of the MOR-type zeolite after the hydrothermal durability test (900°C) is more preferably 30% or more, still more preferably 40% or more.

Additionally, in cases where the MOR-type zeolite is heated at 1050°C for 3 hours under an atmosphere containing 10% water vapor by volume in a hydrothermal durability test (1050°C), the relative crystallinity (1050°C) of the MOR-type zeolite after the hydrothermal durability test (1050°C) is preferably 10% or more. The relative crystallinity of the MOR-type zeolite after the hydrothermal durability test (1050°C) is more preferably 20% or more, still more preferably 30% or more.

Furthermore, in cases where the MOR-type zeolite is heated at 1150°C for 3 hours under an atmosphere containing 10% water vapor by volume in a hydrothermal durability test (1150°C), the relative crystallinity (1150°C) of the MOR-type zeolite after the hydrothermal durability test (1150°C) is preferably 5% or more. The relative crystallinity of the MOR-type zeolite after the hydrothermal durability test (1150°C) is more preferably 10% or more, still more preferably 20% or more.

In cases where the above zeolite is an MOR-type zeolite containing no Al in the framework or containing Al in a Si/Al atomic ratio of 50 or more, the micropore volume maintenance rate (900°C), which is the ratio of micropore volume in the zeolite after to before a hydrothermal durability test (900°C), is preferably 90% or more, for the same reason as described for the MFI-type zeolite. Moreover, the micropore volume maintenance rate (1050°C), which is the ratio of micropore volume in the zeolite after to before a hydrothermal durability test (1050°C), is preferably 85% or more, and the micropore volume maintenance rate (1150°C), which is the ratio of micropore volume in the zeolite after to before a hydrothermal durability test (1150°C), is preferably 70% or more.

Also in the case of the above MFI-type zeolite, *BEA-type zeolite, or MOR-type zeolite containing no Al in the framework or containing Al in a Si/Al atomic ratio of 50 or more, the water absorption ratio of each zeolite before a hydrothermal durability test is preferably measured to be 6.0% by weight or less in an environment with a temperature of 25°C and a relative water vapor pressure of 0.4, which is indicative of successful production of a zeolite with excellent hydrophobicity. In cases where the above zeolite is the MFI-type zeolite, the above water absorption ratio is more preferably 3.0% by weight or less, still more preferably 2.5% or less, from the viewpoint of achieving excellent hydrophobicity. Additionally, in cases where the above zeolite is the *BEA-type zeolite, the above water absorption ratio is more preferably 4.0% by weight or less from the viewpoint of achieving excellent hydrophobicity.

The zeolites before a hydrothermal durability test may contain fluorine and/or an organic structure-directing agent in pores.

Applications of the zeolites are not specifically limited, but the zeolites can be used for, for example, VOC (volatile organic compounds) adsorbing honeycomb rotors, petrochemical catalysts, catalysts for automobiles, adsorbers for automobiles, and ion exchangers.

<<<Zeolite Manufacturing Method>>>

The above zeolites can be obtained by the following high durability treatment using a solution containing fluoride ions or using hot water. The "hot water" as used herein shall mean water at a temperature of 50°C or more.

<<High Durability Treatment with a Solution Containing Fluoride Ions>>

A raw material zeolite containing at least Si in the framework but containing no Al or containing Al in a Si/Al atomic ratio of 50 or more (excluding, however, any FAU-type zeolite) is first prepared. In the case of a raw material zeolite having a low Si/Al atomic ratio, the resulting zeolite may suffer from collapse of structure caused by dealumination that occurs in a hydrothermal durability test, even if the raw material zeolite is treated by a high durability treatment as described below, and the zeolite can fail to effectively increase the hydrothermal durability. In contrast, the high durability treatment to a raw material zeolite having a Si/Al atomic ratio of 50 or more can effectively increase the hydrothermal durability of the resulting zeolite against hydrothermal durability tests. The lower limit of the Si/Al atomic ratio in the raw material zeolite is preferably more than 50, more preferably 80 or more. The upper limit of the Si/Al atomic ratio in the raw material zeolite is not specifically limited but is preferably 5000 or less, more preferably 2000 or less, though the raw material zeolite may be a raw material zeolite with a Si/Al atomic ratio of, for example, infinity, that is those composed of nearly only $SiO_2$.

The type of the raw material zeolite is not specifically limited, provided that FAU-type zeolites are excluded from the raw material zeolite. Examples of the raw material zeolite include MFI-type, *BEA-type, and MOR-type zeolites.

The raw material zeolite may contain a heteroatom(s) in the framework. The presence of the heteroatom(s) in the raw material zeolite can increase the hydrophobicity of the resulting zeolite. Examples of the heteroatom include Ti, V, Cr, Mn, Fe, Co, Ga, Ge, Ni, Cu, Zn, Zr, Nb, In, Sn, and Hf.

The raw material zeolite to be prepared may be synthesized from starting materials for zeolites, or a commercially available zeolite can be used as the raw material zeolite. For example, an MFI-type zeolite HSZ-890HOA (Si/Al = 750) or a *BEA-type zeolite HSZ-990HOA (Si/Al = 750) (both manufactured by Tosoh Corporation) can be used.

The raw material zeolite used may be finely pulverized and used. In the raw material zeolite, the average particle diameter ranges from about 0.01 μm to 15 μm, preferably from about 0.01 μm to 5 μm, more preferably from about 0.01 μm to 2 μm. The above-described pulverized raw material zeolite with an average particle diameter of 0.01 μm or more is not an extremely fine material and can easily be used. The average particle diameter of a raw material zeolite can be measured by image analysis with a scanning electron microscope (SEM) or by laser diffraction analysis. Both the analyses produce nearly the same average particle diameters, but the average particle diameter used in the present invention should be determined by image analysis with a SEM. In the image analysis with a SEM, a SEM (product name: "S-4800"; manufactured by Hitachi High-Technologies Corporation) is used to capture images at a magnification of 20,000 times, and 50 particles in the SEM images are analyzed to measure the major and minor axes and calculate an average value in each particle, and the values from all the particles are averaged to calculate the average particle diameter. In the laser diffraction analysis, zeolite particles dispersed in a solvent, such as water or ethanol, are analyzed by laser diffraction.

The method for the above pulverization is not specifically limited, but the pulverization can be conducted using a ball mill, a bead mill, a planetary ball mill, a jet mill, or the like. Among those, use of a bead mill can minimize amorphous transformation in a raw material zeolite. A bead mill is an apparatus that usually uses ceramic beads with an average particle diameter of 30 μm to 500 μm for crushing and powdering. Since a bead mill uses small beads as grinding media, powder particles processed in a bead mill are more frequently collided with beads or with other powder particles and receive less force per collision than those processed in a ball mill or a planetary ball mill, and the powder particles can be pulverized in an efficient manner with preventing the surface of particles from transforming into an amorphous phase. However, a raw material zeolite is partly transformed into an amorphous phase even if a bead mill is used.

After a raw material zeolite or a pulverized raw material zeolite is prepared, the raw material zeolite is brought into contact with a solution containing fluoride ions to perform a high durability treatment on the raw material zeolite. By this high durability treatment, a zeolite with increased hydrothermal durability can be obtained.

The solution containing fluoride ions (this solution is hereinafter sometimes referred to as "high durability solution") may contain, in addition to fluoride ions and a solvent, an organic structure-directing agent. The presence of an organic structure-directing agent in the high durability solution can allow the organic structure-directing agent to fill pores in the zeolite and to stabilize the structure of the zeolite, and consequently to further increase the hydrothermal durability.

However, the high durability solution does not need to contain an organic structure-directing agent.

The high durability treatment with a solution containing fluoride ions is preferably performed with stirring the high durability solution to further increase the hydrothermal durability. The stirring is not specifically limited by the presence or absence of stirring and by the speed of stirring, but the stirring speed may be 1 rpm or more and 1000 rpm or less. The minimum stirring speed is preferably 2 rpm or more, more preferably 5 rpm or more, and the maximum stirring speed is preferably 800 rpm or less, more preferably 500 rpm or less.

The temperature of the high durability solution in the above-described high durability treatment is not specifically limited but should be a temperature of 0°C or more and lower than 374°C. The lowest temperature of the high durability solution is preferably 10°C or more, more preferably 20°C or more, and the highest temperature of the high durability solution is preferably 250°C or less, more preferably 200°C or less, still more preferably not 150°C or less, most preferably 100°C or less.

The duration of the above-described high durability treatment is not specifically limited but should be 10 minutes or longer. The above-described stabilizing treatment for a period of 10 minutes or longer can provide a zeolite with surely increased hydrothermal durability. The minimum duration of the high durability treatment with a solution containing fluoride ions is not specifically limited but is preferably 1 hour or more, more preferably 3 hours or more. Moreover, the maximum duration of the above-described high durability treatment is preferably 72 hours or less, more preferably 48 hours or less, from the viewpoint of energy consumption.

<Fluoride Ions>

The fluoride ions can be provided by dissolving a fluoride, such as, but not specifically limited to, ammonium fluoride, sodium fluoride, potassium fluoride, tetramethylammonium fluoride, tetraethylammonium fluoride, or tetrapropylammonium fluoride, in a solvent.

The concentration of fluoride ions in the high durability solution is preferably 0.001% by mass or more. In cases where the concentration of fluoride ions is 0.001% by mass or more, the hydrothermal durability can be effectively increased. The minimum concentration of fluoride ions is preferably 0.005% by mass or more, more preferably 0.01% by mass or more. The maximum concentration of fluoride ions is more preferably 25% by mass or less, still more preferably 15% by mass or less, in view of preventing collapse of structure in the resulting zeolite.

<Solvent>

Examples of the solvent include, but are not specifically limited to, water.

<Organic Structure-Directing Agent>

The term "organic structure-directing agent" means an organic molecule that serves to define the diameter of pores and the crystal structure in zeolites. The resulting zeolite can be controlled with respect to, for example, the structure depending on, for example, the type of an organic structure-directing agent.

The organic structure-directing agent is not specifically limited, but examples of the organic structure-directing agent include tetraalkylammoniums, such as tetramethylammonium, tetraethylammonium, tetrapropylammonium, and tetrabutylammonium; and primary amines, secondary amines, tertiary amines, and polyamines, such as morpholine, di-n-propylamine, tri-n-propylamine, tri-n-isopropylamine, triethylamine, triethanolamine, piperidine, piperazine, cyclohexylamine, 2-methylpyridine, N,N-dimethylbenzylamine, N,N-diethylethanolamine, dicyclohexylamine, N,N-dimethylethanolamine, choline, N,N'-dimethylpiperazine, 1,4-diazabicyclo[2.2.2]octane, N-methyldiethanolamine, N-methylethanolamine, N-methylpiperidine, 3-methylpiperidine, N-methylcyclohexylamine, 3-methylpyridine, 4-methylpyridine, quinuclidine, N,N'-dimethyl-1,4-diazabicyclo[2.2.2]octane ion, di-n-butylamine, neopentylamine, di-n-pentylamine, isopropylamine, $t$-butylamine, ethylenediamine, pyrrolidine, 2-imidazolidone, diisopropylethylamine, dimethylcyclohexylamine, cyclopentylamine, N-methyl-n-butylamine, and hexamethyleneimine. Among those, tetraethylammonium hydroxide (TEAOH) is preferably used because tetraethylammonium hydroxide (TEAOH) occluded within pores is easy to stabilize the frameworks. These agents may be used individually or in combination of two or more.

In cases where the high durability solution contains an organic structure-directing agent, the concentration of the organic structure-directing agent in the high durability solution is preferably 0.001% by mass or more. In cases where the concentration of the organic structure-directing agent is 0.001% by mass or more, the hydrothermal durability can be further effectively increased. The minimum concentration of the organic structure-directing agent is 0.1% by mass or more, preferably 1% by mass or more. The maximum concentration of the organic structure-directing agent is 50% by mass or less, preferably 35% by mass or less, from the viewpoint of production cost.

After the high durability treatment, the treated zeolite is washed and dried. Then, the zeolite may be calcined at a temperature of 250°C or more and 800°C or less. Organic matters and fluorine can be removed from the zeolite by the calcination. Finally, a high durability-treated zeolite can be obtained.

« High Durability Treatment with Hot Water»

A raw material zeolite containing at least Si in the framework but containing no Al or containing Al in a Si/Al atomic ratio of 50 or more is first prepared in the same manner as above. The raw material zeolite is similar to the raw material zeolite described in the section of the treatment with fluoride ions, and the explanation of the raw material zeolite shall be omitted. Moreover, the raw material zeolite may be pulverized in the same manner as described above.

After a raw material zeolite or a pulverized raw material zeolite is provided, a raw material zeolite is brought into contact with hot water at a temperature of 50°C or more and 250°C or less to perform a high durability treatment on the raw material zeolite. By this high durability treatment, a zeolite with increased hydrothermal durability can be obtained. For the contact of a raw material zeolite with hot water, the raw material zeolite may be directly put into hot water to bring the zeolite into contact with hot water. Alternatively, the raw material zeolite may be put into water at a temperature of lower than 50°C, and the resulting dispersion of the raw material zeolite in water may be heated to bring the raw material zeolite into contact with hot water.

The hot water is not specifically limited, but examples of the hot water can include distilled water, ion exchange water, pure water, tap water, or industrial water. Among those, pure water can suitably be used. The hot water may contain other ingredients or impurities, provided that the effects of the invention are exerted.

The hot water at a temperature of 50°C or more can increase the hydrothermal durability, while the hot water at a temperature of 250°C or less can ensure safe operation. The lowest temperature of the hot water is preferably 60°C or more, more preferably 70°C or more. Moreover, the highest temperature of the hot water is preferably 200°C or less, more preferably 180°C or less.

The duration of the above-described high durability treatment (the time period during which a zeolite material is in contact with hot water) is not specifically limited but should be 1 hour or more. The stabilizing treatment for a period of 1 hour or more can provide a zeolite with surely increased hydrothermal durability. The minimum duration of the stabilizing treatment is not specifically limited but is preferably 2 hours or more, more preferably not 3 hours or more. Moreover, the maximum duration of the high durability treatment is preferably 24 hours or less, more preferably 6 hours or less, from the viewpoint of energy consumption.

After the above-described high durability treatment, the treated zeolite is washed and dried. Then, the zeolite may be calcinated at a temperature of 300°C or more and 800°C or less. Organic matters and fluorine can be removed from the zeolite by the calcination. Finally, a high durability-treated zeolite can be obtained.

In the present embodiment, a solution containing fluoride ions or hot water can be used for the high durability treatment to increase the hydrothermal durability of zeolites. The reasons are considered as follows. The presence of defect sites (silanol defect sites) in zeolite crystals causes reduced hydrothermal durability of the zeolites. Fluoride ions can induce the cleavage and rearrangement of Si-O bonds in zeolite frameworks. Moreover, the contact of fluoride ions with a raw material zeolite allows Si in the zeolite framework to migrate, so that the defect sites converge to reduce the total surface area and decrease the number of the defect sites. Therefore, the high durability treatment using a solution containing fluoride ions induces repair of defects by the action of the fluoride ions and provides zeolites with less defects due to the migration of Si. In addition, fluoride ion has ability to repair defects, but chloride or bromide ion have no ability to repair defects. The reason is considered that the size of fluoride ion is smaller than that of chloride or bromide ion, so that fluoride ions are easily incorporated into zeolites. In addition, the contact of hot water with a raw material zeolite allows Si in the zeolite framework to migrate, so that the defect sites converge to reduce the total surface area and decrease the number of the defect sites, as in the case of a solution containing fluoride ions. Therefore, the high durability treatment using hot water provides zeolites with less defects due to the action of hot water.

As described in Non-Patent Document 1, use of a fluoride for the synthesis of a zeolite is considered to increase the hydrothermal durability of the zeolites, but the increase in hydrothermal durability in zeolites achieved by this method is less significant. The reason is considered that a fluoride added for the synthesis of a zeolite plays a role in crystal structure formation but is less likely to function in repair of defects. In contrast, the high durability treatment in the present embodiment is performed on synthesized zeolites, which allows fluoride ions to function in repair of defects.

The present embodiment, which can increase the hydrothermal durability in zeolites through the high durability treatment with a solution containing fluoride ions or with hot water, can allow zeolites to maintain a relative crystallinity (900°C) of 20% or more when the zeolites are heated at 900°C for 3 hours under an atmosphere containing 10% water vapor by volume. Moreover, the above high durability treatment, which is performed on zeolites, can allow the zeolites to indicate hydrophobicity, so that the zeolites have a water absorption ratio of 6.0% by weight or less in an environment with a temperature of 25°C and a relative water vapor pressure of 0.4.

The present embodiment, which can increase the hydrothermal durability in zeolites through the high durability treatment with a solution containing fluoride ions or with hot water, can allow an MFI-type zeolite containing at least Si but not Al in the framework or having a Si/Al atomic ratio of 50 or more to keep a relative crystallinity (1050°C) of 20% or more when the zeolite is heated at 1050°C for 3 hours under an atmosphere containing 10% water vapor by volume, and can allow a *BEA-type zeolite containing at least Si but not Al in the framework or having a Si/Al atomic ratio of 50 or more to keep a relative crystallinity (1100°C) of 20% or more when the zeolite is heated at 1100°C for 3 hours under an atmosphere containing 10% water vapor by volume, and can allow an MOR-type zeolite containing at least Si but not Al in the framework or having a Si/Al atomic ratio of 50 or more to keep a relative crystallinity (900°C) of 20% or more when the zeolite is heated at 900°C for 3 hours under an atmosphere containing 10% water vapor by volume. The relative crystallinity of those zeolites is value that has not been established by conventional methods.

EXAMPLES

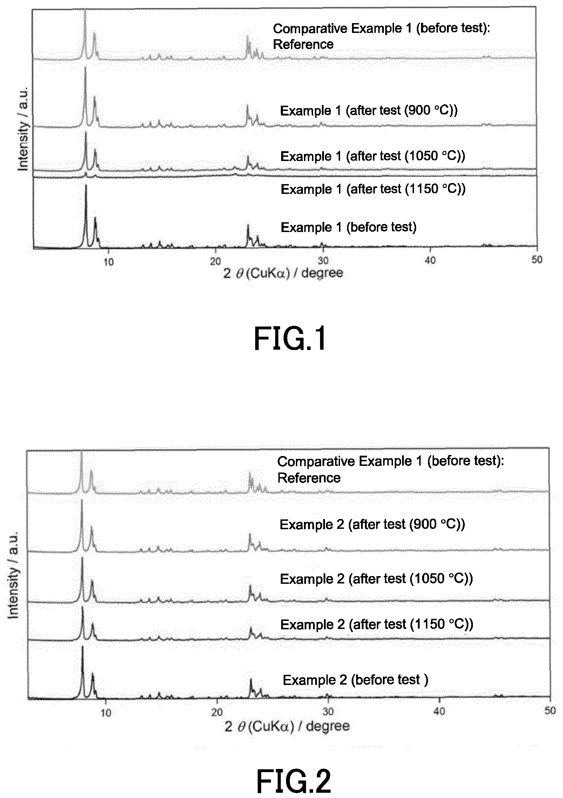

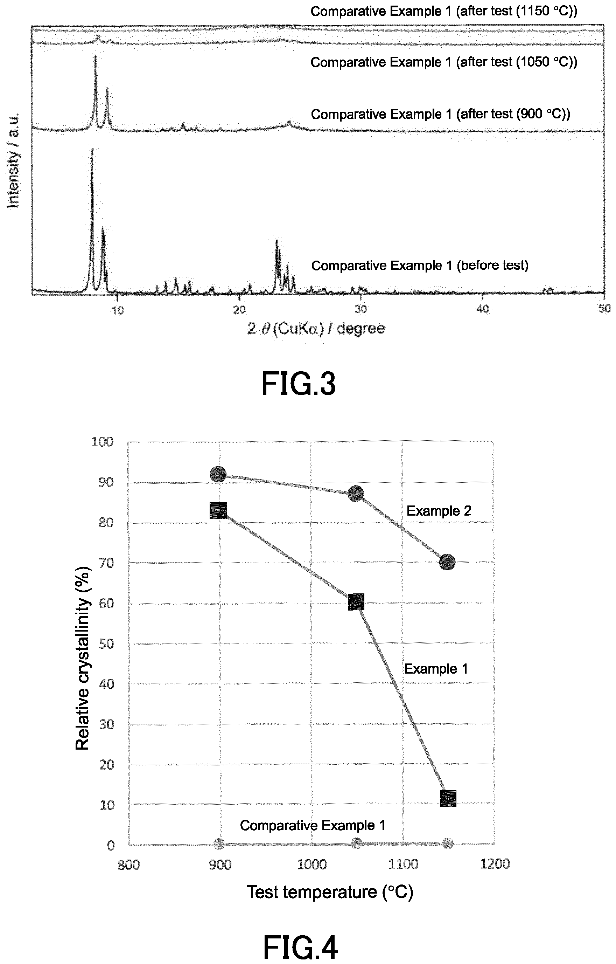

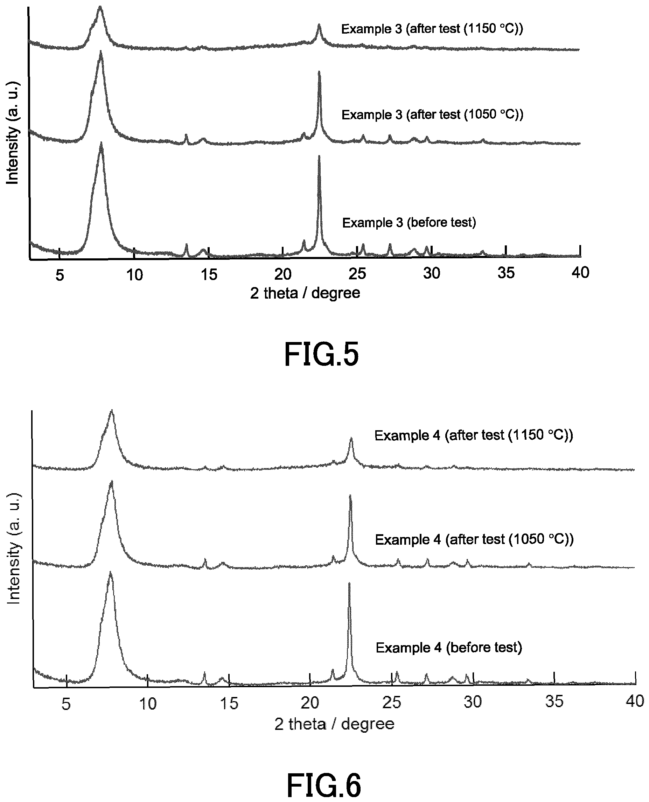

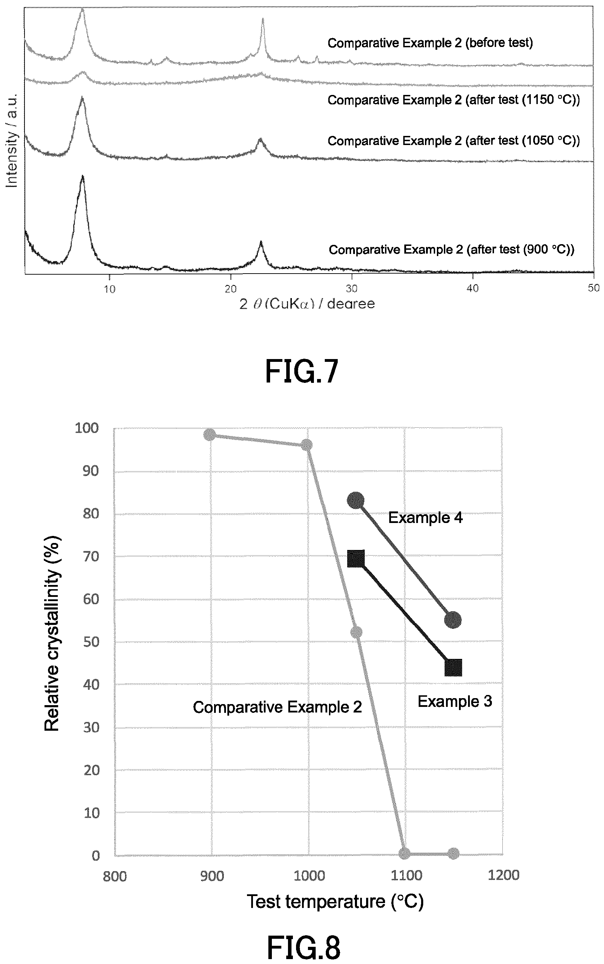

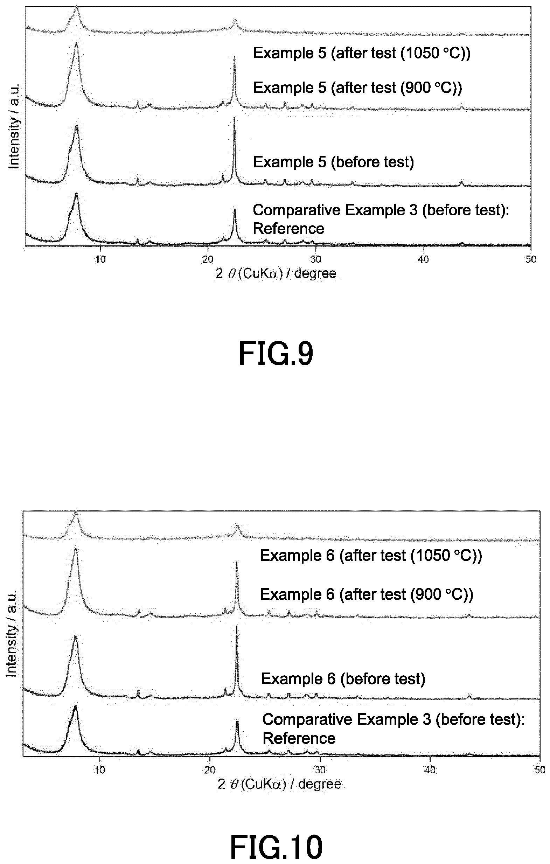

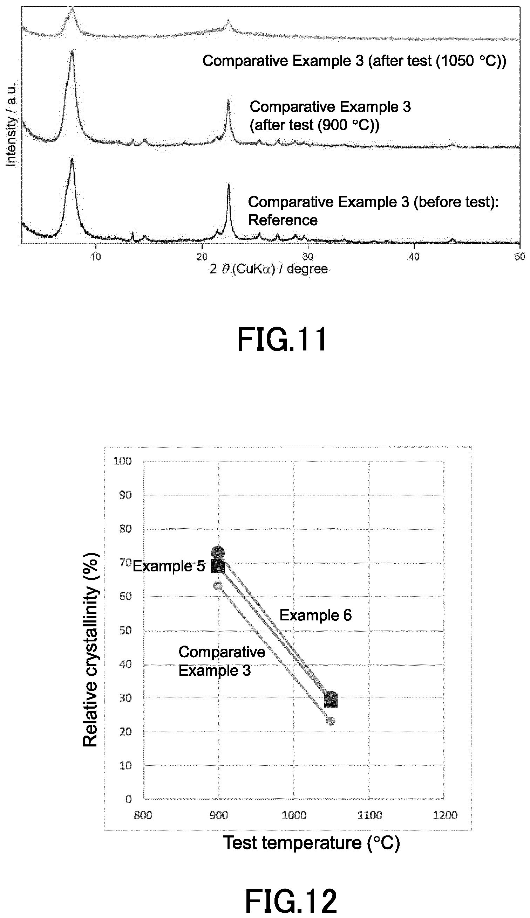

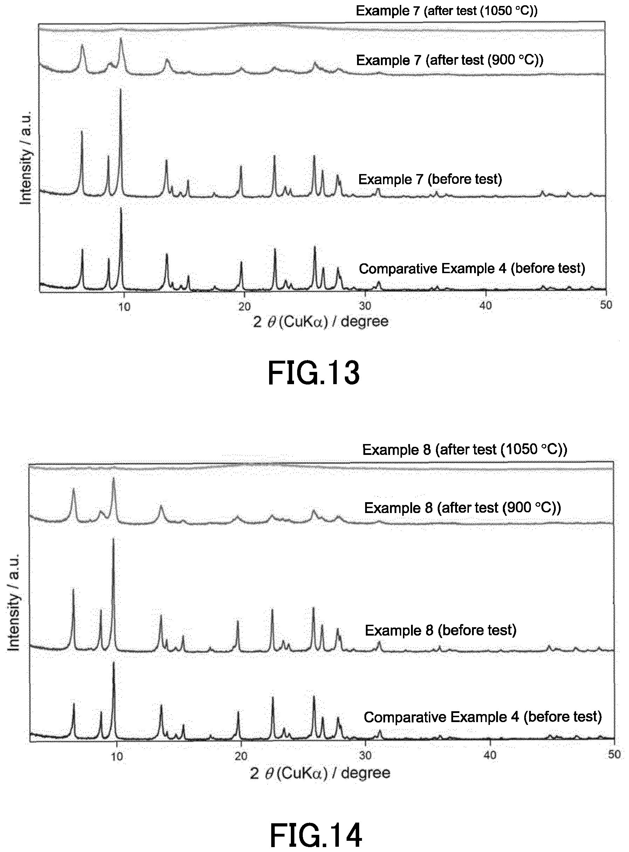

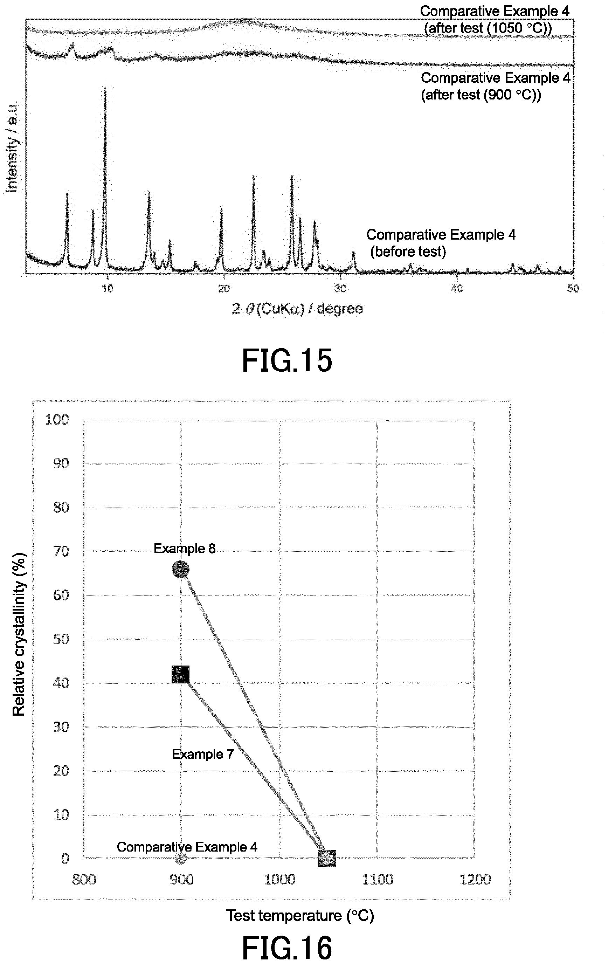

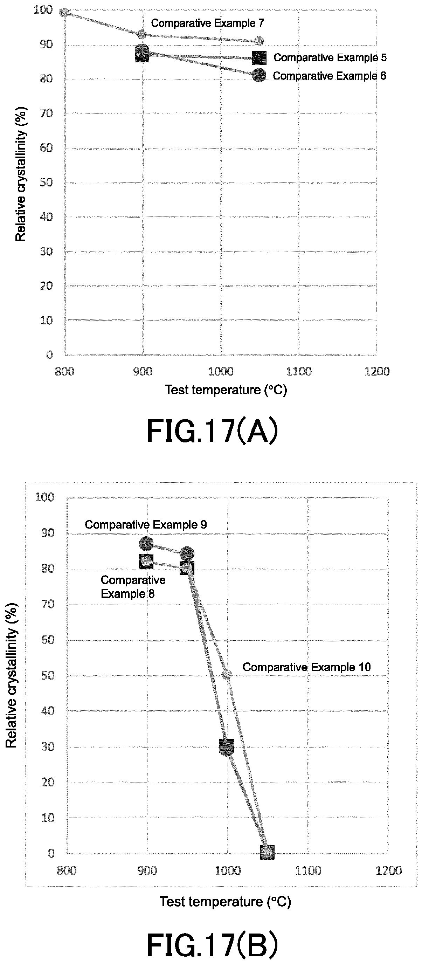

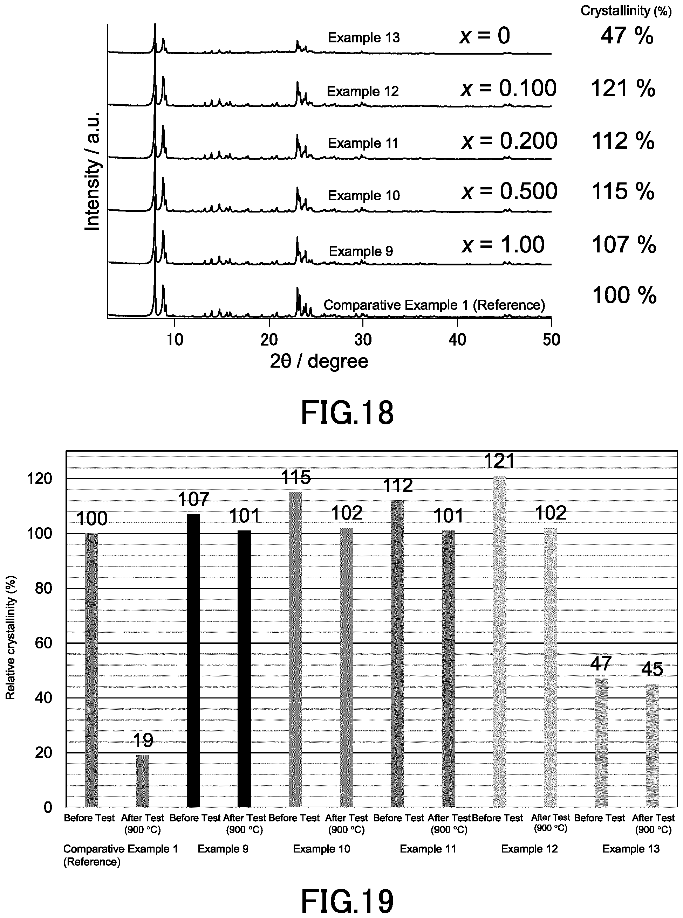

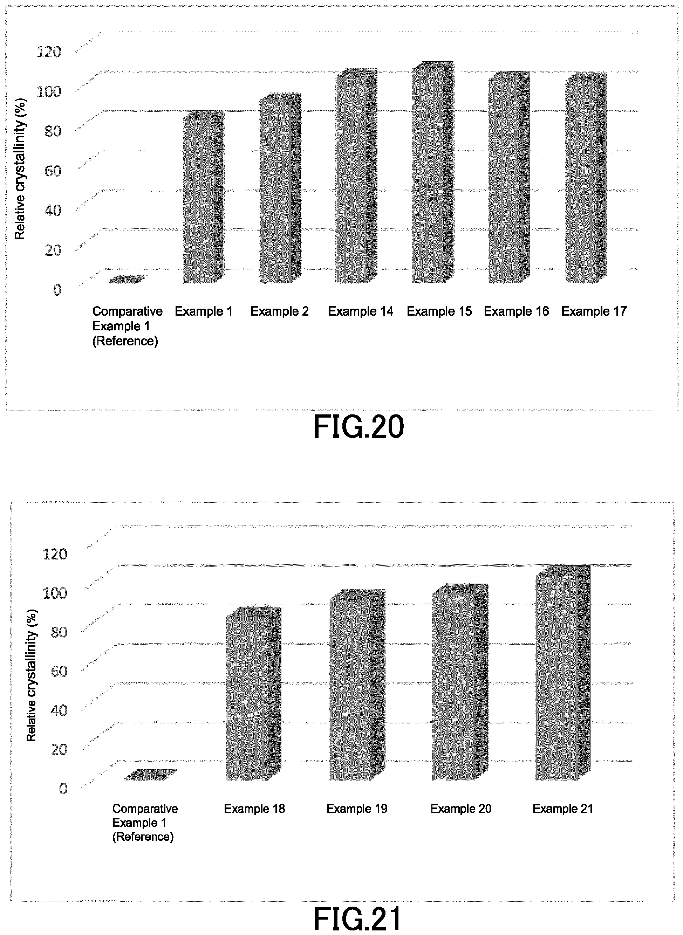

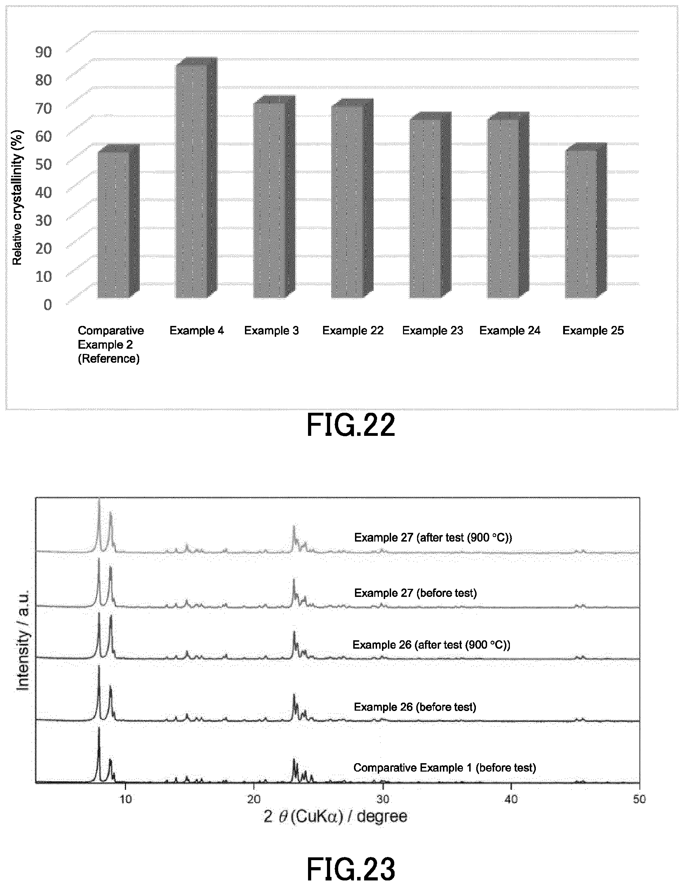

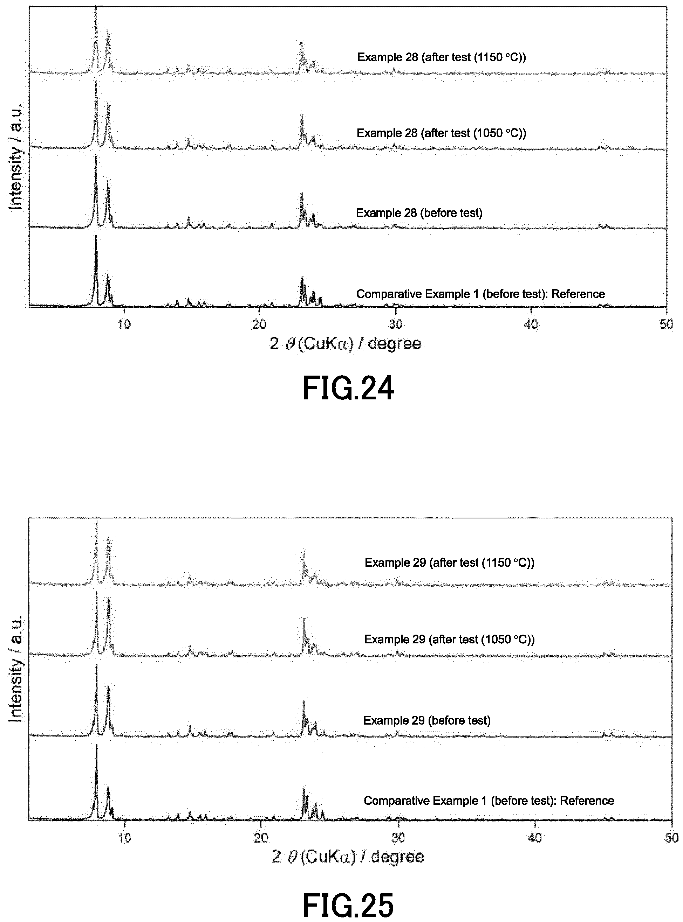

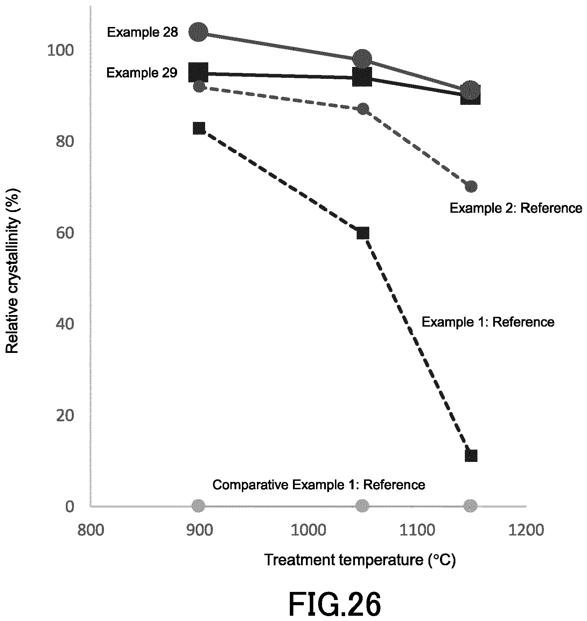

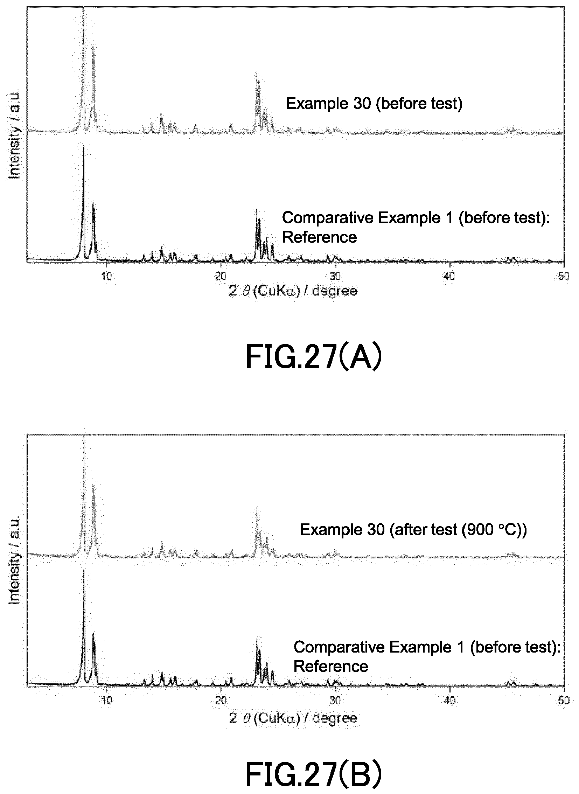

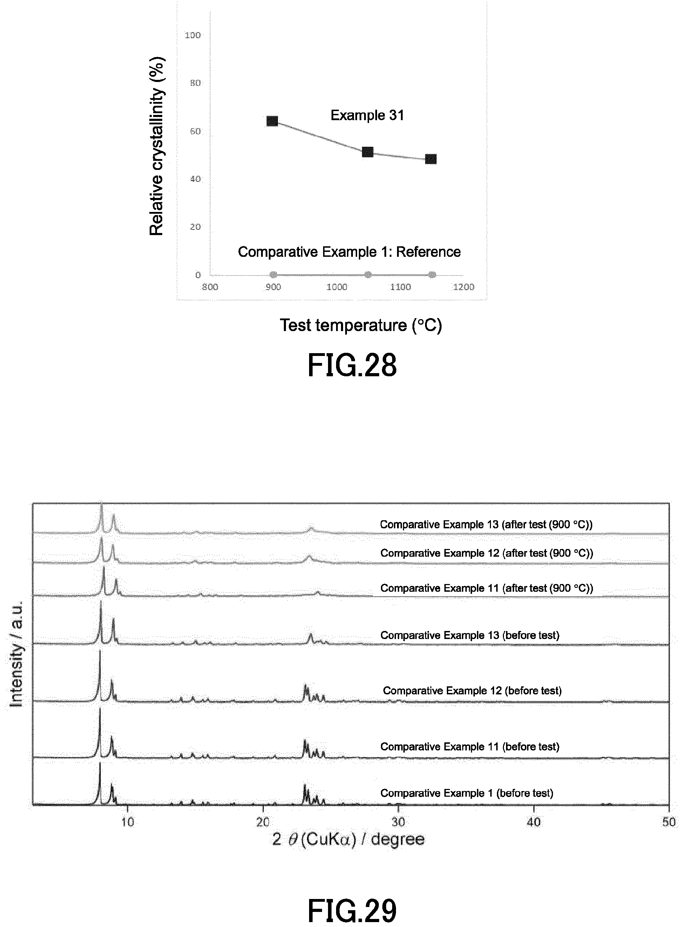

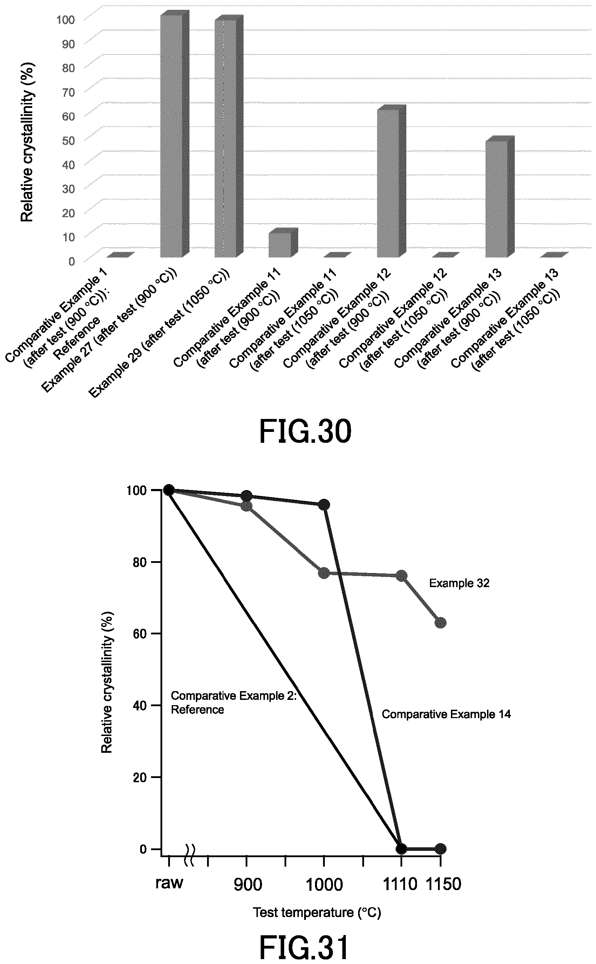

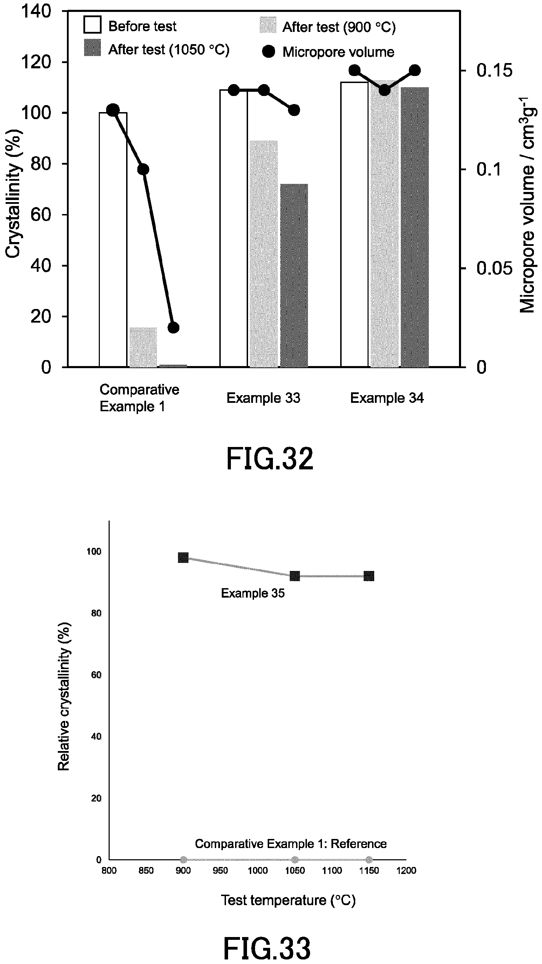

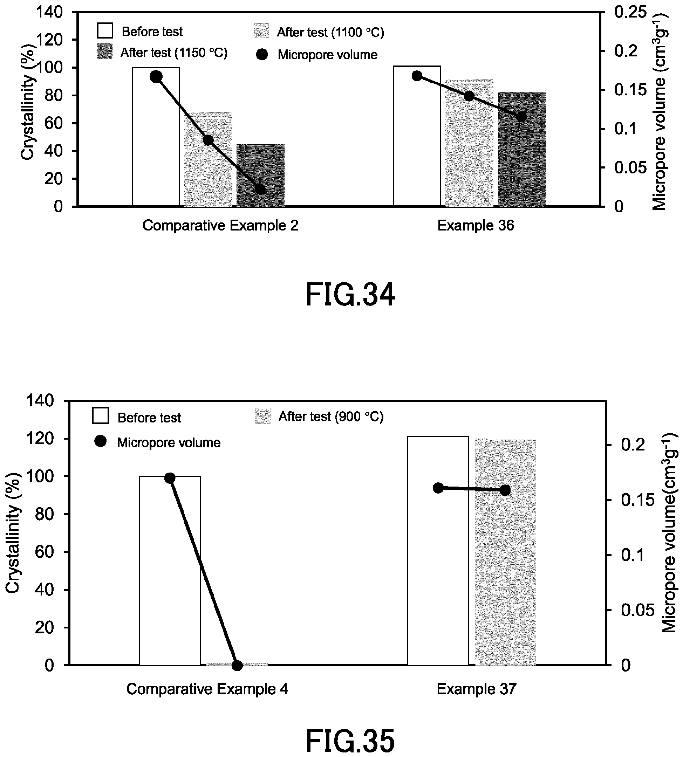

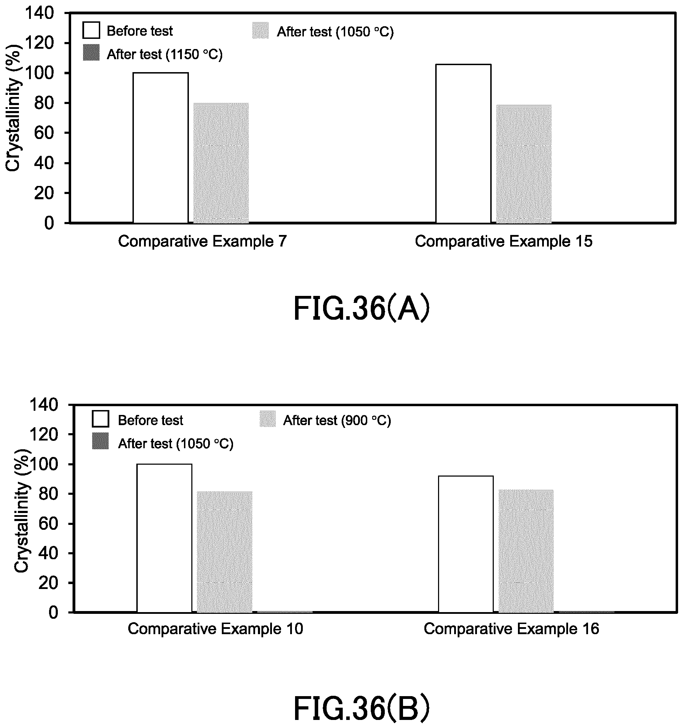

The present invention will be described in detail by way of examples, but the invention is not limited by the description. Fig. 1 shows X-ray diffraction patterns of a zeolite according to Example 1 before and after hydrothermal durability tests, and Fig. 2 shows X-ray diffraction patterns of a zeolite according to Example 2 before and after hydrothermal durability tests, and Fig. 3 shows X-ray diffraction patterns of a zeolite according to Comparative Example 1 before and after hydrothermal durability tests, and Fig. 4 depicts a graph showing the relative crystallinity of zeolites according to Examples 1 and 2 and Comparative Example 1 after hydrothermal durability tests. Fig. 5 shows X-ray diffraction patterns of a zeolite according to Example 3 before and after hydrothermal durability tests, and Fig. 6 shows X-ray diffraction patterns of a zeolite according to Example 4 before and after hydrothermal durability tests, and Fig. 7 shows X-ray diffraction patterns of a zeolite according to Comparative Example 2 before and after hydrothermal durability tests, and Fig. 8 depicts a graph showing the relative crystallinity of zeolites according to Examples 3 and 4 and Comparative Example 2 after hydrothermal durability tests. Fig. 9 shows X-ray diffraction patterns of a zeolite according to Example 5 before and after hydrothermal durability tests, and Fig. 10 shows X-ray diffraction patterns of a zeolite according to Example 6 before and after hydrothermal durability tests, and Fig. 11 shows X-ray diffraction patterns of a zeolite according to Comparative Example 3 before and after hydrothermal durability tests, and Fig. 12 depicts a graph showing the relative crystallinity of zeolites according to Examples 5 and 6 and Comparative Example 3 after hydrothermal durability tests. Fig. 13 shows X-ray diffraction patterns of a zeolite according to Example 7 before and after hydrothermal durability tests, and Fig. 14 shows X-ray diffraction patterns of a zeolite according to Example 8 before and after hydrothermal durability tests, and Fig. 15 shows X-ray diffraction patterns of a zeolite according to Comparative Example 4 before and after hydrothermal durability tests. Fig. 16 depicts a graph showing the relative crystallinity of zeolites according to Examples 7 and 8 and Comparative Example 4 after hydrothermal durability tests. Fig. 17 (A) depicts a graph showing the relative crystallinity of zeolites according to Comparative Examples 5 to 7 after hydrothermal durability tests and Fig. 17 (B) depicts a graph showing those of zeolites according to Comparative Examples 8 to 10 after hydrothermal durability tests, and Fig. 18 shows X-ray diffraction patterns of zeolites according to Examples 9 to 13 before a hydrothermal durability test, and Fig. 19 depicts a graph showing the crystallinity of zeolites according to Examples 9 to 13 before and after a hydrothermal durability test. Fig. 20 depicts a graph showing the relative crystallinity of zeolites according to Examples 1, 2, and 14 to 17 after a hydrothermal durability test (900°C), and Fig. 21 depicts a graph showing the relative crystallinity of zeolites according to Examples 18 to 21 after a hydrothermal durability test (900°C), and Fig. 22 depicts a graph showing the relative crystallinity of zeolites according to Examples 3, 4, and 22 to 25 after a hydrothermal durability test (1050°C). Fig. 23 shows X-ray diffraction patterns of zeolites according to Examples 26 and 27 before and after a hydrothermal durability test, and Fig. 24 shows X-ray diffraction patterns of a zeolite according to Example 28 before and after hydrothermal durability tests, and Fig. 25 shows X-ray diffraction patterns of a zeolite according to Example 29 before and after hydrothermal durability tests, and Fig. 26 depicts a graph showing the relative crystallinity of zeolites according to Examples 28 and 29 after hydrothermal durability tests. Fig. 27 (A) shows an X-ray diffraction pattern of a zeolite according to Example 30 before a hydrothermal durability test and Fig. 27 (B) shows an X-ray diffraction pattern of the zeolite after the hydrothermal durability test, and Fig. 28 depicts a graph showing the relative crystallinity of a zeolite according to Example 31 after hydrothermal durability tests, and Fig. 29 shows X-ray diffraction patterns of zeolites according to Comparative Examples 11 to 13 before and after a hydrothermal durability test, and Fig. 30 depicts a graph showing the relative crystallinity of zeolites according to Examples 27 and 29 and Comparative Examples 11 to 13 after hydrothermal durability tests, and Fig. 31 depicts a graph showing the relative crystallinity of zeolites according to Example 32 and Comparative Example 14 after hydrothermal durability tests. Fig. 32 depicts a graph showing the crystallinity of zeolites according to Examples 33 and 34 and Comparative Example 1 before and after hydrothermal durability tests, and Fig. 33 depicts a graph showing the relative crystallinity of a zeolite according to Example 35 after hydrothermal durability tests, and Fig. 34 depicts a graph showing the crystallinity of zeolites according to Example 36 and Comparative Example 2 before and after hydrothermal durability tests, and Fig. 35 depicts a graph showing the crystallinity of a zeolite according to Example 37 before and after a hydrothermal durability test. Fig. 36 (A) depicts a graph showing the crystallinity of zeolites according to Comparative Examples 7 and 15 before and after hydrothermal durability tests and Fig. 36 (B) depicts a graph showing those of zeolites according to Comparative Examples 10 and 16 before and after hydrothermal durability tests. The term "test" in each drawing shall mean a hydrothermal durability test.

<Analysis Equipment>

Powder X-ray diffraction analyzer: product name: "Ultima IV"; manufactured by Rigaku Corporation; using CuKα radiation; voltage: 40 kV; current: 40 mA; scanning step: 0.02°; scanning speed: 2°/min
Gas adsorption analyzer: product name: "Autosorb-iQ2"; manufactured by Anton Paar GmbH; at liquid nitrogen temperature
Vapor sorption volumetric analyzer: product name: "VSTA"; manufactured by Anton Paar GmbH; at 25°C

<Examples 1 and 2 and Comparative Example 1>

In Examples 1 and 2, an MFI-type raw material zeolite (product name: "HSZ-890HOA"; manufactured by Tosoh Corporation; Si/Al = 750; average particle diameter: 0.7 μm) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 0.40:0.35:5.3, to obtain a solution containing fluoride ions. To 10 g of the solution, 5 g of the above raw material zeolite was added, and the resulting mixture was left at 170°C without stirring for a predetermined period of time. Subsequently, the treatment product was separated from the solution, washed with water, and dried at 80°C. Then, the dried product was calcinated at 550°C to provide zeolites according to Examples 1 and 2. Each mixture was left for 3 hours in Example 1, and for 24 hours in Example 2.

Additionally, an MFI-type zeolite (product name: "HSZ-890HOA"; manufactured by Tosoh Corporation; Si/Al = 750; average particle diameter: 0.7 μm) was not treated with the solution containing fluoride ions or with hot water as described below and was directly used as a zeolite according to Comparative Example 1.

Next, the zeolites according to Examples 1 and 2 and Comparative Example 1 were individually tested by hydrothermal durability tests to determine the relative crystallinity of the zeolites after the hydrothermal durability tests. Specifically, 1 g of each zeolite was first placed in an alumina ceramic tube, and a small piece of fire-resistant wool was placed above and below the zeolite to hold the zeolite in the center of the alumina ceramic tube. Then, the alumina ceramic tube was mounted in a muffle furnace and was heated from room temperature to a predetermined temperature and kept at the predetermined temperature for 3 hours while air containing 10% water vapor by volume was blown into the alumina ceramic tube, to perform a hydrothermal durability test. The zeolites according to Examples 1 and 2 and Comparative Example 1 were individually tested by hydrothermal durability tests at 900°C, 1050°C, and 1150°C. Subsequently, each zeolite was taken out of the tube after the zeolite was naturally cooled down. The zeolites according to Examples 1 and 2 and Comparative Example 1 were analyzed by X-ray diffraction analysis with the above powder X-ray diffraction analyzer before and after the hydrothermal durability tests, and the crystallinity was individually determined from the obtained X-ray diffraction patterns (see Fig. 1 to Fig. 3). The crystallinity was determined using the sum of the integrated intensities of peaks in the range of 2θ from 20° to 30°, where the integrated intensities were calculated after the broad background peak for amorphous material was subtracted for correction. The reason why the integrated intensities of peaks in the range of 2θ from 20° to 30° are used is that the peaks from each zeolite are less affected by water adsorption. Finally, the relative crystallinity of each zeolite was determined from the obtained crystallinity for every hydrothermal durability test, where the crystallinity of the zeolite before the hydrothermal durability test was defined as 100%.

<Examples 3 and 4 and Comparative Example 2>

In Examples 3 and 4, a *BEA-type raw material zeolite (product name: "HSZ-990HOA"; manufactured by Tosoh Corporation; Si/Al = 750; average particle diameter: 0.7 μm) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 0.40:0.35:5.3, to obtain a solution containing fluoride ions. To 10 g of the solution, 5 g of the above raw material zeolite was added, and the resulting mixture was left at 170°C without stirring for a predetermined period of time. Subsequently, the treatment product was separated from the solution, washed with water, and dried at 80°C. Then, the dried product was calcinated at 550°C to provide zeolites according to Examples 3 and 4. Each mixture was left for 3 hours in Example 3, and for 24 hours in Example 4.

Additionally, a *BEA-type zeolite (product name: "HSZ-990HOA"; manufactured by Tosoh Corporation; Si/Al = 750; average particle diameter: 0.7 μm) was not treated with the solution containing fluoride ions or with hot water as described below and was directly used as a zeolite according to Comparative Example 2.

Next, the zeolites according to Examples 3 and 4 and Comparative Example 2 were individually tested in the same manner as in Example 1 by hydrothermal durability tests, and the zeolites according to Examples 3 and 4 and Comparative Example 2 were analyzed by X-ray diffraction analysis with the above powder X-ray diffraction analyzer before and after the hydrothermal durability tests, and the relative crystallinity of the zeolites after the hydrothermal durability tests was determined from the X-ray diffraction patterns (see Fig. 5 to Fig. 7). The zeolites according to Examples 3 and 4 were individually tested by the hydrothermal durability tests at 1050°C and 1150°C, and the zeolite according to Comparative Example 2 was tested by the hydrothermal durability tests at 900°C, 1000°C, 1050°C, 1100°C, and 1150°C.

<Examples 5 and 6 and Comparative Example 3>

In Examples 5 and 6, a *BEA-type raw material zeolite (product name: "HSZ-960HOA"; manufactured by Tosoh Corporation; Si/AI = 50; average particle diameter: 0.7 $\mu$m) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 0.40:0.35:5.3, to obtain a solution containing fluoride ions. To 10 g of the solution, 5 g of the above raw material zeolite was added, and the resulting mixture was left at 170°C without stirring for a predetermined period of time. Subsequently, the treatment product was separated from the solution, washed with water, and dried at 80°C. Then, the dried product was calcined at 550°C to provide zeolites according to Examples 5 and 6. Each mixture was left for 3 hours in Example 5, and for 24 hours in Example 6.

Additionally, a *BEA-type zeolite (product name: "HSZ-960HOA"; manufactured by Tosoh Corporation; Si/AI = 50; average particle diameter: 0.7 $\mu$m) was not treated with the solution containing fluoride ions or with hot water as described below and was directly used as a zeolite according to Comparative Example 3.

Next, the zeolites according to Examples 5 and 6 and Comparative Example 3 were individually tested in the same manner as in Example 1 by hydrothermal durability tests, and the zeolites according to Examples 5 and 6 and Comparative Example 3 were analyzed by X-ray diffraction analysis with the above powder X-ray diffraction analyzer before and after the hydrothermal durability tests, and the relative crystallinity of the zeolites after the hydrothermal durability tests was determined from the X-ray diffraction patterns (see Fig. 9 to Fig. 11). The zeolites according to Examples 5 and 6 and Comparative Example 3 were individually tested by the hydrothermal durability tests at 900°C and 1050°C.

<Examples 7 and 8 and Comparative Example 4>

In Examples 7 and 8, an MOR-type raw material zeolite (product name: "HSZ-690HOA"; manufactured by Tosoh Corporation; Si/AI = 120; average particle diameter: 0.7 $\mu$m) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 0.40:0.35:5.3, to obtain a solution containing fluoride ions. To 10 g of the solution, 5 g of the above raw material zeolite was added, and the resulting mixture was left at 170°C without stirring for a predetermined period of time. Subsequently, the treatment product was separated from the solution, washed with water, and dried at 80°C. Then, the dried product was calcined at 550°C to provide zeolites according to Examples 7 and 8. Each mixture was left for 3 hours in Example 7, and for 24 hours in Example 8.

Additionally, an MOR-type zeolite (product name: "HSZ-690HOA"; manufactured by Tosoh Corporation; Si/AI = 120; average particle diameter: 0.7 $\mu$m) was not treated with the solution containing fluoride ions or with hot water as described below and was directly used as a zeolite according to Comparative Example 4.

Next, the zeolites according to Examples 7 and 8 and Comparative Example 4 were individually tested in the same manner as in Example 1 by hydrothermal durability tests, and the zeolites according to Examples 7 and 8 and Comparative Example 4 were analyzed by X-ray diffraction analysis with the above powder X-ray diffraction analyzer before and after the hydrothermal durability tests, and the relative crystallinity of the zeolites after the hydrothermal durability tests was determined from the X-ray diffraction patterns (see Fig. 13 to Fig. 15). The zeolites according to Examples 7 and 8 and Comparative Example 4 were individually tested by the hydrothermal durability tests at 900°C and 1050°C.

<Comparative Examples 5 to 7>

In Comparative Examples 5 and 6, an MFI-type raw material zeolite (product name: "HSZ-840HOA"; manufactured by Tosoh Corporation; Si/AI = 20; average particle diameter: 0.3 $\mu$m) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 0.40:0.35:5.3, to obtain a solution containing fluoride ions. To 10 g of the solution, 5 g of the above raw material zeolite material was added, and the resulting mixture was left at 170°C without stirring for a predetermined period of time. Subsequently, the treatment product was separated from the solution, washed with water, and dried at 80°C. Then, the dried product was calcinated at 550°C to provide zeolites according to Comparative Examples 5 and 6. Each mixture was left for 3 hours in Comparative Example 5, and for 24 hours in Comparative Example 6.

Additionally, an MFI-type zeolite (product name: "HSZ-840HOA"; manufactured by Tosoh Corporation; Si/Al = 20; average particle diameter: 3 $\mu$m) was not treated with the solution containing fluoride ions or with hot water as described below and was directly used as a zeolite according to Comparative Example 7.

Next, the zeolites according to Comparative Examples 5 to 7 were individually tested in the same manner as in Example 1 by hydrothermal durability tests, and the zeolites according to Comparative Examples 5 to 7 were analyzed by X-ray diffraction analysis with the above powder X-ray diffraction analyzer before and after the hydrothermal durability tests, and the relative crystallinity of the zeolites after the hydrothermal durability tests was determined from the X-ray diffraction patterns. The zeolites according to Comparative Examples 5 and 6 were individually tested by the hydrothermal durability tests at 900°C and 1050°C, and the zeolite according to Comparative Example 7 was tested by the hydrothermal durability tests at 800°C, 900°C, and 1050°C.

<Comparative Examples 8 to 10>

In Comparative Examples 8 and 9, a *BEA-type raw material zeolite (product name: "HSZ-940HOA"; manufactured by Tosoh Corporation; Si/Al = 20; average particle diameter: 0.7 $\mu$m) was first prepared as a raw material zeolite material. Ammonium fluoride ($NH_4F$) and tetraethylammonium hydroxide (TEAOH) were added to water at a molar ratio of ammonium fluoride to tetraethylammonium hydroxide to water of 0.40:0.35:5.3, to obtain a solution containing fluoride ions. To 10 g of the solution, 5 g of the above raw material zeolite was added, and the resulting mixture was left at 170°C without stirring for a predetermined period of time. Subsequently, the treatment product was separated from the solution, and dried at 80°C. Then, the dried product was calcinated at 550°C to provide zeolites according to Comparative Examples 8 and 9. Each mixture was left for 3 hours in Comparative Example 8, and for 24 hours in Comparative Example 9.

Additionally, a *BEA-type zeolite (product name: "HSZ-940HOA"; manufactured by Tosoh Corporation; Si/Al = 20; average particle diameter: 0.7 $\mu$m) was not treated with the solution containing fluoride ions or with hot water as described below and was directly used as a zeolite according to Comparative Example 10.

Next, the zeolites according to Comparative Examples 8 to 10 were individually tested in the same manner as in Example 1 by hydrothermal durability tests, and the zeolites according to Comparative Examples 8 to 10 were analyzed by X-ray diffraction analysis with the above powder X-ray diffraction analyzer before and after the hydrothermal durability tests, and the relative crystallinity of the zeolites after the hydrothermal durability tests was determined from the X-ray diffraction patterns. The zeolites according to Comparative Examples 8 to 10 were individually tested by the hydrothermal durability tests at 900°C, 950°C, 1000°C, and 1050°C.

<Examples 9 to 13>

In Examples 9 to 13, an MFI-type raw material zeolite (product name: "HSZ-890HOA"; manufactured by Tosoh Corporation; Si/Al = 750; average particle diameter: 3 $\mu$m) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 1.14:x:15.3, to obtain a solution containing fluoride ions. To 10 g of the solution, 5 g of the above zeolite was added, and the resulting mixture was left at 170°C without stirring for 3 hours. Subsequently, the resulting product was washed with water, and dried at 80°C. Then, the dried product was calcinated at 550°C to give zeolites according to Examples 9 to 13. The letter x represents 1.00 in Example 9, 0.50 in Example 10, 0.20 in Example 11, 0.10 in Example 12, and 0 in Example 13.

Next, the zeolites according to Examples 9 to 13 were individually tested by a hydrothermal durability test, and the zeolites according to Examples 9 to 13 were analyzed by X-ray diffraction analysis with the above powder X-ray diffraction analyzer before and after the hydrothermal durability test, and the crystallinity of the zeolites before and after the hydrothermal durability test was individually determined from the X-ray diffraction patterns (see Fig. 18). The hydrothermal durability test was performed in the same manner as in Example 1, except that all the zeolites were heated from room temperature to 900°C and kept at 900°C for 3 hours.

<Examples 14 to 17>

In Examples 14 to 17, an MFI-type raw material zeolite (product name: "HSZ-890HOA"; manufactured by Tosoh Corporation; Si/Al = 750; average particle diameter: 3 $\mu$m) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 0.40:0.35:5.3, to obtain a solution containing fluoride ions. To 10 g of the solution, 5 g of the above raw material zeolite was added, and the resulting mixture was left at a predetermined temperature without stirring for a predetermined period of time. Subsequently, the treatment product was separated from the solution, washed with water, and dried at 80°C. Then, the dried product was calcinated at 550°C to provide zeolites according to Examples 14 to 17. Each mixture was left at 170°C for 3 hours in Example 14, at 170°C for 24 hours in Example 15, at 150°C for 24 hours in Example 16, and at 130°C for 24 hours in Example 17.

Next, the zeolites according to Examples 14 to 17 were individually tested by a hydrothermal durability test, and the zeolites according to Examples 14 to 17 were analyzed by X-ray diffraction analysis with the above powder X-ray diffraction analyzer before and after the hydrothermal durability test, and the relative crystallinity of the zeolites after the hydrothermal durability test was determined from the X-ray diffraction patterns. The hydrothermal durability test was performed in the same manner as in Example 1, except that the zeolites were heated from room temperature to 900°C and kept at 900°C for 3 hours.

<Examples 18 to 21>

In Examples 18 to 21, an MFI-type raw material zeolite (product name: "HSZ-890HOA"; manufactured by Tosoh Corporation; Si/Al = 750; average particle diameter: 3 $\mu$m) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 0.004:0.35:5.3, to obtain a solution containing fluoride ions. To 10 g of the solution, 5 g of the above zeolite was added, and the resulting mixture was left at a predetermined temperature for a predetermined period of time. Subsequently, the treatment product was separated from the solution, washed with water, and dried at 80°C. Then, the dried product was calcinated at 550°C to provide zeolites according to Examples 18 to 21. Each mixture was left at 170°C for 3 hours in Example 18, at 170°C for 24 hours in Example 19, at 80°C for 3 hours in Example 20, and at 80°C for 24 hours in Example 21. Moreover, the above solution was left without stirring in Examples 18 and 19, and with stirring at a stirring speed of 20 rpm in Examples 20 and 21.

Next, the zeolites according to Examples 18 to 21 were individually tested by a hydrothermal durability test, and the zeolites according to Examples 18 to 21 were analyzed by X-ray diffraction analysis with the above powder X-ray diffraction analyzer before and after the hydrothermal durability test, and the relative crystallinity of the zeolites after the hydrothermal durability test was determined from the X-ray diffraction patterns. The hydrothermal durability test was performed in the same manner as in Example 1, except that the zeolites were heated from room temperature to 900°C and kept at 900°C for 3 hours.

<Examples 22 to 25>

In Examples 22 to 25, a *BEA-type raw material zeolite (product name: "HSZ-960HOA"; manufactured by Tosoh Corporation; Si/Al = 50; average particle diameter: 0.7 $\mu$m) was first prepared as a raw material zeolite material. Ammonium fluoride ($NH_4F$) and tetraethylammonium hydroxide (TEAOH) were added to water at a molar ratio of ammonium fluoride to tetraethylammonium hydroxide to water of 0.40:0.35:5.3, to obtain a solution containing fluoride ions. To 10 g of the solution, 5 g of the above raw material zeolite was added, and the resulting mixture was left at a predetermined temperature without stirring for a predetermined period of time. Subsequently, the treatment product was separated from the solution, washed with water, and dried at 80°C. Then, the dried product was calcinated at 550°C to provide Zeolites according to Examples 22 to 25. Each mixture was left at 170°C for 2 hours in Example 22, at 170°C for 1 hour in Example 23, at 170°C for 30 minutes in Example 24, and at 80°C for 3 hours in Example 25.

Next, the zeolites according to Examples 22 to 25 were individually tested by a hydrothermal durability test, and the zeolites according to Examples 22 to 25 were analyzed by X-ray diffraction analysis with the above powder X-ray diffraction analyzer before and after the hydrothermal durability test, and the relative crystallinity of the zeolites after the hydrothermal durability test was determined from the X-ray diffraction patterns. The hydrothermal durability test was performed in the same manner as in Example 1, except that the zeolites were heated from room temperature to 1050°C and kept at 1050°C for 3 hours.

<Examples 26 and 27>

In Examples 26 and 27, an MFI-type raw material zeolite (product name: "HSZ-890HOA"; manufactured by Tosoh Corporation; Si/Al = 750; average particle diameter: 3 $\mu$m) was first prepared as a zeolite material. Ammonium fluoride ($NH_4F$) and tetraethylammonium hydroxide (TEAOH) were added to water at a molar ratio of ammonium fluoride to tetraethylammonium hydroxide to water of 0.01:0.1:5.3, to obtain a solution containing fluoride ions. To 10 g of the solution, 5 g of the above raw material zeolite was added, and the resulting mixture was left at 80°C with stirring at a speed of 20 rpm for a predetermined period of time. Subsequently, the treatment product was separated from the solution, washed with water, and dried at 80°C. Then, the dried product was calcinated at 550°C to provide zeolites according to Examples 26 and 27. Each mixture was left for 3 hours in Example 26, and for 24 hours in Example 27.

Next, the zeolites according to Examples 26 and 27 were individually tested by hydrothermal durability tests, and the zeolites according to Examples 26 and 27 were analyzed by X-ray diffraction analysis with the above powder X-ray diffraction analyzer before and after the hydrothermal durability tests, and X-ray diffraction patterns were obtained (see Fig. 23). The hydrothermal durability test was performed in the same manner as in Example 1, except that the zeolites were heated from room temperature to 900°C and kept at 900°C for 3 hours.

<Example 28>

In Example 28, an MFI-type zeolite (product name: "HSZ-890HOA"; manufactured by Tosoh Corporation; Si/Al = 750; average particle diameter: 3 $\mu$m) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 0.01:0.1:5.3, to obtain a solution containing fluoride ions. To 10 g of the solution, 5 g of the above raw material zeolite was added, and the resulting mixture was left at 80°C with stirring at a speed of 20 rpm for 3 hours. Subsequently, the treatment product was separated from the solution, washed with water, and dried at 80°C. Then, the dried product was calcinated at 550°C to provide a zeolite according to Example 28.

Next, the zeolite according to Example 28 was tested in the same manner as in Example 1 by hydrothermal durability tests, and the zeolite according to Example 28 was analyzed by X-ray diffraction analysis with the above powder X-ray diffraction analyzer before and after the hydrothermal durability tests, and X-ray diffraction patterns were obtained (see Fig. 24). The zeolite according to Example 28 was tested by the hydrothermal durability tests at 1050°C and 1150°C.

<Example 29>

In Example 29, an MFI-type raw material zeolite (product name: "HSZ-890HOA"; manufactured by Tosoh Corporation; Si/Al = 750; average particle diameter: 3 $\mu$m) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 0.01:0.1:5.3, to obtain a solution containing fluoride ions. To 10 g of the solution, 5 g of the above raw material zeolite was added, and the resulting mixture was left at 80°C with stirring at a speed of 20 rpm for 3 hours. Subsequently, the treatment product was separated from the solution, washed with water, and dried at 80°C. Then, the dried product was calcinated at 550°C to provide a zeolite according to Example 29.

Next, the zeolite according to Example 29 was tested in the same manner as in Example 1 by hydrothermal durability tests, and the zeolite according to Example 29 was analyzed by X-ray diffraction analysis with the above powder X-ray diffraction analyzer before and after the hydrothermal durability tests, and X-ray diffraction patterns were obtained (see Fig. 25). The zeolite according to Example 29 was tested by the hydrothermal durability tests at 1050°C and 1150°C.

<Example 30>

In Example 30, an MFI-type zeolite (product name: "HSZ-890HOA"; manufactured by Tosoh Corporation; Si/Al = 750; average particle diameter: 3 $\mu$m) was first prepared as a raw material zeolite. Ammonium fluoride ($NH_4F$) and tetraethylammonium hydroxide (TEAOH) were added to water at a molar ratio of ammonium fluoride to tetraethylammonium hydroxide to water of 0.40:0.35:5.3, to obtain a solution containing fluoride ions. To 10 g of the solution, 5 g of the above raw material zeolite was added, and the resulting mixture was left at 40°C with stirring at a speed of 20 rpm for 3 hours. Subsequently, the treatment product was separated from the solution, washed with water, and dried at 80°C. Then, the dried product was calcinated at 550°C to provide a zeolite according to Example 30.

Next, the zeolite according to Example 30 was tested in the same manner as in Example 1 by hydrothermal durability tests, and the zeolite according to Example 30 was analyzed by X-ray diffraction analysis with the above powder X-ray diffraction analyzer before and after the hydrothermal durability tests, and X-ray diffraction patterns were obtained (see Figs. 27(A) and (B)). The zeolite according to Example 30 was tested by the hydrothermal durability test at 900°C.

<Example 31>

In Example 31, an MFI-type zeolite (product name: "HSZ-890HOA"; manufactured by Tosoh Corporation; Si/Al = 750; average particle diameter: 3 $\mu$m) was first prepared as a zeolite material. Sodium fluoride (NaF) and tetraethylammonium hydroxide (TEAOH) were added to water at a molar ratio of sodium fluoride to tetraethylammonium hydroxide to water of 0.0040:0.035:5.3, to obtain a solution containing fluoride ions. To 10 g of the solution, 5 g of the above raw material zeolite was added, and the resulting mixture was left at 170°C for a predetermined period of time. Subsequently, the treatment product was separated from the solution, washed with water, and dried at 80°C. Then, the dried product was calcinated at 550°C to give a zeolite according to Example 31. The mixture was left for 3 hours in Example 31.

Next, the zeolite according to Example 31 was tested by hydrothermal durability tests, and the zeolite according to Example 31 was analyzed by X-ray diffraction analysis with the above powder X-ray diffraction analyzer before and after the hydrothermal durability tests, and the relative crystallinity of the zeolite after the hydrothermal durability tests was determined from the X-ray diffraction patterns. The zeolite according to Example 31 was tested by the hydrothermal durability tests at 900°C, 1050°C, and 1150°C.

<Comparative Examples 11 to 13>

In Comparative Examples 11 to 13, an MFI-type zeolite was treated with low-temperature steam. Specifically, an MFI-type zeolite (product name: "HSZ-890HOA"; manufactured by Tosoh Corporation; Si/Al = 750; average particle diameter: 3 $\mu$m) was first prepared. Subsequently, the zeolite was heated at a predetermined temperature for 24 hours under an atmosphere containing 10% water vapor by volume. The zeolite was heated at 500°C in Comparative Example 11, at 600°C in Comparative Example 12, and at 700°C in Comparative Example 13.

Next, the zeolites according to Comparative Examples 11 to 13 were individually tested in the same manner as in Example 1 by hydrothermal durability tests, and the zeolites according to Comparative Examples 11 to 13 were analyzed by X-ray diffraction analysis with the above powder X-ray diffraction analyzer before and after the hydrothermal durability tests, and the relative crystallinity of the zeolites after the hydrothermal durability tests was determined from the X-ray diffraction patterns (see Fig. 29). The zeolites according to Comparative Examples 11 to 13 were individually tested by the hydrothermal durability tests at 900°C and 1050°C.

<Example 32 and Comparative Example 14>

In Comparative Example 14, a zeolite was first synthesized using a fluoride. Specifically, fumed silica (product name: "CAB-O-SIL® M5"; manufactured by Cabot Corporation) as a silica source and aluminium hydroxide (manufactured by Wako Pure Chemical Industries, Ltd.) as an alumina source were added to and dissolved in an aqueous solution of tetraethylammonium hydroxide, to which an aqueous solution of ammonium fluoride was later added. The composition of the mixture was as follows: 1 $SiO_2$ : 0.0167 $Al(OH)_3$ : 0.35 tetraethylammonium : 0.4 $NH_4F$ : 5.77 $H_2O$. The mixture was hydrothermally treated at 140°C for 6 days, and the resulting product was washed and recovered. Then, the obtained product was calcinated at 550°C to obtain a zeolite according to Comparative Example 14. The zeolite according to Comparative Example 14 was a *BEA-type zeolite. Moreover, the zeolite according to Comparative Example 14 had an average particle diameter of 10 $\mu$m.

In Example 32, the zeolite according to Comparative Example 14 was pulverized using zirconia beads of 300 $\mu$m diameter at a speed of 9 m/s for 60 minutes. Ammonium fluoride ($NH_4F$) and tetraethylammonium hydroxide (TEAOH) were added to water at a molar ratio of ammonium fluoride to tetraethylammonium hydroxide to water of 0.40:0.35:5.3, to obtain a solution containing fluoride ions. To 10 g of the solution, 5 g of the above pulverized raw material zeolite was added, and the resulting mixture was left at 170°C without stirring for 24 hours. Subsequently, the treatment product was separated from the solution, washed with water, and dried at 80°C. Then, the dried product was calcinated at 550°C to provide a zeolite according to Example 32. The zeolite according to Example 32 was a *BEA-type zeolite containing no Al. Moreover, the zeolite according to Example 32 had an average particle diameter of 0.15 $\mu$m.

Next, the zeolites according to Example 32 and Comparative Example 14 were individually tested in the same manner as in Example 1 by hydrothermal durability tests, and the zeolites according to Example 32 and Comparative Example 14 were analyzed by X-ray diffraction analysis with the above powder X-ray diffraction analyzer before and after the hydrothermal durability tests, and the relative crystallinity of the zeolites after the hydrothermal durability tests was determined from the X-ray diffraction patterns. The zeolites according to Example 32 and Comparative Example 14 were tested by the hydrothermal durability tests at 900°C, 1000°C, 1100°C, and 1150°C.

<Examples 33 to 35>

In Examples 33 to 35, an MFI-type raw material zeolite (product name: "HSZ-890HOA"; manufactured by Tosoh Corporation; Si/Al = 750; average particle diameter: 3 $\mu$m) was first prepared as a zeolite material. Then, 5 g of the above raw material zeolite was added to 10 g of pure water, and the resulting mixture was left with heating the pure water to a predetermined temperature and without stirring for 24 hours. Subsequently, the treatment product was separated from the pure water, washed with water, and dried at 80°C. Then, the dried product was calcinated at 550°C to provide zeolites according to Examples 33 to 35. The pure water was heated to a temperature of 80°C in Example 33, to a temperature of 120°C in Example 34, and to a temperature of 170°C in Example 35.

Next, the zeolites according to Examples 33 to 35 were individually tested in the same manner as in Example 1 by hydrothermal durability tests, and the zeolites according to Examples 33 to 35 were analyzed by X-ray diffraction analysis with the above powder X-ray diffraction analyzer before and after the hydrothermal durability tests, and the relative crystallinity of the zeolites after the hydrothermal durability tests was determined from the X-ray diffraction patterns. The zeolites according to Examples 33 and 34 were individually tested by the hydrothermal durability tests at 900°C and 1050°C, and the zeolite according to Example 35 was tested by hydrothermal durability tests at 900°C, 1050°C, and 1150°C.

<Example 36>

In Example 36, a *BEA-type raw material zeolite (product name: "HSZ-990HOA"; manufactured by Tosoh Corporation; Si/Al = 750; average particle diameter: 0.7 $\mu$m) was first prepared as a raw material zeolite. Then, 5 g of the above raw material zeolite was added to 10 g of pure water, and the resulting mixture was left with heating the pure water to a temperature of 120°C and without stirring for 24 hours. Subsequently, the treatment product was separated from the pure water, washed with water, and dried at 80°C. Then, the dried product was calcined at 550°C to provide a zeolite according to Example 36.

Next, the zeolite according to Example 36 was tested in the same manner as in Example 1 by hydrothermal durability tests, and the zeolite according to Example 36 was analyzed by X-ray diffraction analysis with the above powder X-ray diffraction analyzer before and after the hydrothermal durability tests, and the relative crystallinity of the zeolite after the hydrothermal durability tests was determined from the X-ray diffraction patterns. The zeolite according to Example 36 was tested by the hydrothermal durability tests at 1100°C and 1150°C.

<Example 37>

In Example 37, an MOR-type raw material zeolite (product name: "HSZ-690HOA"; manufactured by Tosoh Corporation; Si/Al = 120; average particle diameter: 0.3 $\mu$m) was first prepared as a raw material zeolite. Then, 5 g of the above raw material zeolite was added to 10 g of pure water, and the resulting mixture was left with heating the pure water to a temperature of 120°C and without stirring for 24 hours. Subsequently, the treatment product was separated from the pure water, washed with water, and dried at 80°C. Then, the dried product was calcined at 550°C to provide a zeolite according to Example 37.

Next, the zeolite according to Example 37 was tested in the same manner as in Example 1 by a hydrothermal durability test, and the zeolite according to Example 37 was analyzed by X-ray diffraction analysis with the above powder X-ray diffraction analyzer before and after the hydrothermal durability test, and the relative crystallinity of the zeolite after the hydrothermal durability test was determined from the X-ray diffraction pattern. The zeolite according to Example 37 was tested by the hydrothermal durability test at 900°C.

<Comparative Example 15>

In Comparative Example 15, an MFI-type raw material zeolite (product name: "HSZ-840HOA"; manufactured by Tosoh Corporation; Si/Al = 20; average particle diameter: 3 $\mu$m) was first prepared as a raw material zeolite. Then, 5 g of the above raw material zeolite was added to 10 g of pure water, and the resulting mixture was left with heating the pure water to a temperature of 120°C and without stirring for 24 hours. Subsequently, the treatment product was separated from the pure water, washed with water, and dried at 80°C. Then, the dried product was calcined at 550°C to provide a zeolite according to Comparative Example 15.

Next, the zeolite according to Comparative Example 15 was tested in the same manner as in Example 1 by hydrothermal durability tests, and the zeolite according to Comparative Example 15 was analyzed by X-ray diffraction analysis with the above powder X-ray diffraction analyzer before and after the hydrothermal durability tests, and the relative crystallinity of the zeolite after the hydrothermal durability tests was determined from the X-ray diffraction patterns. The zeolite according to Comparative Example 15 was tested by the hydrothermal durability tests at 1050°C and 1150°C.

<Comparative Example 16>

In Comparative Example 16, a *BEA-type raw material zeolite (product name: "HSZ-940HOA"; manufactured by Tosoh Corporation; Si/Al = 20; average particle diameter: 0.7 $\mu$m) was first prepared as a raw material zeolite. Then, 5 g of the above raw material zeolite was added to 10 g of pure water, and the resulting mixture was left with heating the pure water to a temperature of 120°C and without stirring for 24 hours. Subsequently, the treatment product was separated from the pure water, washed with water, and dried at 80°C. Then, the dried product was calcined at 550°C to provide a zeolite according to Comparative Example 16.

Next, the zeolite according to Comparative Example 16 was tested in the same manner as in Example 1 by hydrothermal durability tests, and the zeolite according to Comparative Example 16 was analyzed by X-ray diffraction analysis with the above powder X-ray diffraction analyzer before and after the hydrothermal durability tests, and the relative crystallinity of the zeolite after the hydrothermal durability tests was determined from the X-ray diffraction patterns. The zeolite according to Comparative Example 16 was tested by the hydrothermal durability tests at 900°C and 1050°C.

Table 1 shows the type, Si/Al ratio, and relative crystallinity of the zeolites according to Examples 1 to 37, and Table 2 shows the type, Si/Al ratio, and relative crystallinity of the zeolites according to Comparative Examples 1 to 16.

Table 1

| | Zeolites | | | | |
|---|---|---|---|---|---|
| | Type | Si/Al | Relative crystallinity (%) | | |
| | | | 900°C | 1050°C | 1150°C |
| Example 1 | MFI | 750 | 83 | 60 | 11 |
| Example 2 | MFI | 750 | 92 | 87 | 70 |
| Example 3 | *BEA | 750 | - | 69 | 43 |
| Example 4 | *BEA | 750 | - | 83 | 55 |
| Example 5 | *BEA | 50 | 69 | 29 | - |
| Example 6 | *BEA | 50 | 73 | 30 | - |
| Example 7 | MOR | 120 | 42 | 0 | - |
| Example 8 | MOR | 120 | 66 | 0 | - |
| Example 9 | MFI | 750 | 94 | - | - |
| Example 10 | MFI | 750 | 89 | - | - |
| Example 11 | MFI | 750 | 90 | - | - |
| Example 12 | MFI | 750 | 84 | - | - |
| Example 13 | MFI | 750 | 96 | - | - |
| Example 14 | MFI | 750 | 104 | - | - |
| Example 15 | MFI | 750 | 108 | - | - |
| Example 16 | MFI | 750 | 103 | - | - |
| Example 17 | MFI | 750 | 102 | - | - |
| Example 18 | MFI | 750 | 83 | - | - |
| Example 19 | MFI | 750 | 92 | - | - |
| Example 20 | MFI | 750 | 95 | - | - |
| Example 21 | MFI | 750 | 104 | - | - |
| Example 22 | *BEA | 50 | 68 | - | - |
| Example 23 | *BEA | 50 | 64 | - | - |
| Example 24 | *BEA | 50 | 64 | - | - |
| Example 25 | *BEA | 50 | 53 | - | - |
| Example 26 | MFI | 750 | 95 | 94 | 90 |
| Example 27 | MFI | 750 | 97 | 92 | 91 |
| Example 28 | MFI | 750 | 104 | 98 | 91 |
| Example 29 | MFI | 750 | 95 | 94 | 90 |
| Example 30 | MFI | 750 | 98 | 92 | 92 |

(continued)

| | Zeolites | | | | |
|---|---|---|---|---|---|
| | Type | Si/Al | Relative crystallinity (%) | | |
| | | | 900°C | 1050°C | 1150°C |
| Example 31 | MFI | 750 | 64 | 51 | 48 |
| Example 32 | *BEA | - | 97 | - | 66 |
| Example 33 | MFI | 750 | 82 | 72 | - |
| Example 34 | MFI | 750 | 101 | 110 | - |
| Example 35 | MFI | 750 | 104 | 97 | 97 |
| Example 36 | *BEA | 750 | - | - | 82 |
| Example 37 | MOR | 120 | 99 | - | - |

Table 2

| | Zeolites | | | | |
|---|---|---|---|---|---|
| | Type | Si/Al | Relative crystallinity (%) | | |
| | | | 900°C | 1050°C | 1150°C |
| Comparative Example 1 | MFI | 750 | 0 | 0 | 0 |
| Comparative Example 2 | *BEA | 750 | 98 | 52 | 0 |
| Comparative Example 3 | *BEA | 50 | 63 | 23 | - |
| Comparative Example 4 | MOR | 120 | 0 | 0 | - |
| Comparative Example 5 | MFI | 20 | 87 | 86 | - |
| Comparative Example 6 | MFI | 20 | 88 | 81 | - |
| Comparative Example 7 | MFI | 20 | 93 | 91 | - |
| Comparative Example 8 | *BEA | 20 | 82 | 0 | - |
| Comparative Example 9 | *BEA | 20 | 87 | 0 | - |
| Comparative Example 10 | *BEA | 20 | 82 | 0 | - |
| Comparative Example 11 | MFI | 750 | 10 | 0 | - |
| Comparative Example 12 | MFI | 750 | 61 | 0 | - |
| Comparative Example 13 | MFI | 750 | 48 | 0 | - |
| Comparative Example 14 | *BEA | 60 | - | - | - |
| Comparative Example 15 | MFI | 20 | - | 79 | 0 |
| Comparative Example 16 | *BEA | 20 | 83 | 0 | - |

The results are described below. As shown in Tables 1 and 2 and in the graph of Fig. 4, the zeolites according to Examples 1 and 2 showed higher relative crystallinity after hydrothermal durability tests than the zeolite according to Comparative Example 1. As shown in Tables 1 and 2 and in the graph of Fig. 8, the zeolites according to Examples 3 and 4 showed higher relative crystallinity after hydrothermal durability tests than the zeolite according to Comparative Example 2. As shown in Tables 1 and 2 and in the graph of Fig. 12, the zeolites according to Examples 5 and 6 showed higher relative crystallinity after hydrothermal durability tests than the zeolite according to Comparative Example 3. As shown in Tables 1 and 2 and in the graph of Fig. 16, the zeolites according to Examples 7 and 8 showed higher relative crystallinity after hydrothermal durability tests than the zeolite according to Comparative Example 4. From the results, it can be understood that the hydrothermal durability is increased in MFI-type, *BEA-type, and MOR-type zeolites by contact with a solution containing fluoride ions.

Additionally, as shown in Table 2 and in the graph of Fig. 17 (A), the zeolites according to Comparative Examples 5 and 6 showed lower relative crystallinity after hydrothermal durability tests than the zeolite according to Comparative Example 7. Moreover, as shown in the graph of Fig. 17 (B), the zeolites according to Comparative Examples 8 and 9 showed almost the same relative crystallinity after hydrothermal durability tests as those of the zeolite according to Comparative Example 10. From the results, it can be understood that the hydrothermal durability is not effectively increased in zeolites with a low Si/Al atomic ratio.

From the graph of Fig. 19, it can be understood that the hydrothermal durability is further increased by addition of tetraethylammonium hydroxide (TEAOH) as an organic structure-directing agent to a solution containing fluoride ions, rather than by the absence of the organic structure-directing agent in the solution.

From the graphs of Figs. 20, 22, 26, 27 (A), and 27 (B), it can be understood that use of a solution containing fluoride ions allows the hydrothermal durability to increase even in cases where the temperature for the high durability treatment ranges from 40°C to 170°C. From the graph shown in Fig. 20, it can be understood that the hydrothermal durability is further increased in cases where the high durability treatment is performed with stirring.

From the graph of Fig. 21, it can be understood that the hydrothermal durability is increased even in cases where the concentration of fluoride ions in the solution is extremely low. From the graph of Fig. 28, it can be understood that the hydrothermal durability is increased even in cases where the high durability treatment is performed using a different fluoride from the one used in Example 1. From the graph of Fig. 30, it can be understood that the hydrothermal durability is further increased by the high durability treatment of the invention, rather than by steaming at low temperature. From the graph of Fig. 31, it can be understood that the hydrothermal durability is further increased in a zeolite high durability-treated with a solution containing fluoride ions, rather than in a zeolite synthesized using a fluoride.

As shown in Tables 1 and 2 and in Figs. 32 and 33, the zeolites according to Examples 33 to 35 showed higher relative crystallinity after hydrothermal durability tests than the zeolite according to Comparative Example 1. From the graph of Fig. 32, it can be understood that the high durability treatment with hot water increases the crystallinity of MFI-type zeolites before hydrothermal durability tests, as well as those of the zeolites after the hydrothermal durability tests.

As shown in Tables 1 and 2 and in the graph of Fig. 34, the zeolite according to Example 36 showed higher relative crystallinity after a hydrothermal durability test than the zeolite according to Comparative Example 2.

As shown in Tables 1 and 2, the zeolite according to Example 37 showed higher relative crystallinity after a hydrothermal durability test than the zeolite according to Comparative Example 4. From the graph of Fig. 35, it can be understood that the high durability treatment with hot water increases the crystallinity of an MOR-type zeolite before a hydrothermal durability test, as well as that of the zeolite after the hydrothermal durability test.

Thus, from the above results, it can be understood that the hydrothermal durability is increased in MFI-type, *BEA-type, and MOR-type zeolites by contact with hot water.

Additionally, as shown in Table 2 and in the graph of Fig. 36 (A), the zeolite according to Comparative Example 15 showed almost the same relative crystallinity after hydrothermal durability tests as those of the zeolite according to Comparative Example 7; moreover, as shown in Table 2 and in the graph of Fig. 36 (B), the zeolite according to Comparative Example 16 showed almost the same relative crystallinity after hydrothermal durability tests as those of the zeolite according to Comparative Example 10. From the results, it can be understood that the hydrothermal durability is not effectively increased in zeolites with a low Si/Al atomic ratio.

In addition, micropore volumes before and after hydrothermal durability tests were measured in the zeolites according to Examples 19, 34, 36, and 37 and Comparative Examples 1, 2, and 4, and the micropore volume maintenance rate in each zeolite was determined according to the above equation (1). The micropore volumes were measured using the above gas adsorption analyzer and calculated by the t-plot method.

The results are indicated in Table 3 below.

Table 3

|  | Micropore volume maintenance rate (%) | | |
|---|---|---|---|
|  | 900°C | 1050°C | 1150°C |
| Example 19 | 100 | 107 | 93 |
| Example 34 | 93 | 100 | - |
| Example 36 | - | - | 71 |
| Example 37 | 100 | - | - |
| Comparative Example 1 | 77 | 15 | - |
| Comparative Example 2 | - | - | 12 |

(continued)

|  | Micropore volume maintenance rate (%) | | |
|---|---|---|---|
|  | 900°C | 1050°C | 1150°C |
| Comparative Example 4 | 5 | - | - |

As shown in Table 3, the micropore volume maintenance rates in each of the zeolites according to Examples 19 and 34 were higher than that in the zeolite according to Comparative Example 1. Moreover, the micropore volume maintenance rate in the zeolite according to Example 36 was higher than that in the zeolite according to Comparative Example 2. Furthermore, the micropore volume maintenance rate in the zeolite according to Example 37 was higher than that in the zeolite according to Comparative Example 4. From the results, it can be understood that the treatment of zeolites with fluoride ions or hot water can prevent the zeolites from reducing the micropore volumes even after hydrothermal durability tests are performed.

Furthermore, the water absorption ratios were measured in the zeolites according to Examples 1, 4, 29, 30, 34, 35, and 36 and Comparative Examples 1 and 2 before hydrothermal durability tests. The above vapor sorption volumetric analyzer was used to measure the water absorption ratio at equilibrium in an environment with a temperature of 25°C and a relative water vapor pressure of 0.4.

The results are indicated in Table 4 below.

Table 4

|  | Water absorption ratio (% by weight) |
|---|---|
| Example 1 | 0.6 |
| Example 4 | 2.9 |
| Example 29 | 1.2 |
| Example 30 | 1.1 |
| Example 34 | 1.0 |
| Example 35 | 0.7 |
| Example 36 | 5.6 |
| Comparative Example 1 | 3.7 |
| Comparative Example 2 | 6.7 |

As shown in Table 4, the water absorption ratios of the zeolites according to Examples 1, 29, 30, 34, and 35 were lower than that of the zeolite according to Comparative Example 1. Moreover, as shown in Table 4, the water absorption ratios of the zeolites according to Examples 4 and 36 were lower than that of the zeolite according to Comparative Example 2. From the results, it can be understood that the treatment of zeolites with fluoride ions or hot water makes the zeolites less water absorptive and the resulting zeolites tend to be hydrophobic.

## Claims

1. A zeolite containing at least Si in the framework (excluding FAU-type zeolite), wherein

   the zeolite has a relative crystallinity (900°C) of 20% or more, which is the crystallinity ratio of the zeolite after to before heating the zeolite at 900°C for 3 hours under an atmosphere containing 10% water vapor by volume, and
   the zeolite before heating has a water absorption ratio of 6.0% by weight or less in an environment with a temperature of 25°C and a relative water vapor pressure of 0.4.

2. An MFI-type zeolite containing at least Si but not Al in the framework or having a Si/Al atomic ratio of 50 or more, wherein
   the zeolite has a relative crystallinity (1050°C) of 20% or more, which is the crystallinity ratio of the zeolite after to before heating the zeolite at 1050°C for 3 hours under an atmosphere containing 10% water vapor by volume.

3. A *BEA-type zeolite containing at least Si but not Al in the framework or having a Si/Al atomic ratio of 50 or more, wherein
the zeolite has a relative crystallinity (1100°C) of 20% or more, which is the crystallinity ratio of the zeolite after to before heating the zeolite at 1100°C for 3 hours under an atmosphere containing 10% water vapor by volume.

4. An MOR-type zeolite containing at least Si but not Al in the framework or having a Si/Al atomic ratio of 50 or more, wherein
the zeolite has a relative crystallinity (900°C) of 20% or more, which is the crystallinity ratio of the zeolite after to before heating the zeolite at 900°C for 3 hours under an atmosphere containing 10% water vapor by volume.

5. The zeolite according to any one of claims 2 to 4, wherein the zeolite before heating has a water absorption ratio of 6.0% by weight or less in an environment with a temperature of 25°C and a relative water vapor pressure of 0.4.

6. The zeolite according to any one of claims 1 to 5, wherein the zeolite contains fluorine in pores.

7. The zeolite according to any one of claims 1 to 6, wherein the zeolite contains an organic structure-directing agent in pores.

8. A method of manufacturing zeolite, comprising the steps of: preparing a raw material zeolite (excluding FAU-type raw material zeolite) containing at least Si but not Al in the framework or having a Si/Al atomic ratio of 50 or more, and bringing the raw material zeolite into contact with a solution containing fluoride ions or with hot water at a temperature of 50°C or more and 250°C or less.

9. The method according to claim 8, further comprising a step in which the raw material zeolite is pulverized before the raw material zeolite is brought into contact with the solution containing fluoride ions or with the hot water.

10. The method according to claim 8 or 9, wherein the raw material zeolite is brought into contact with the solution containing fluoride ions in the presence of an organic structure-directing agent.

11. The method according to any one of claims 8 to 10, wherein the concentration of the fluoride ions in the solution is 0.001% by mass or more.

12. The method according to claim 8, wherein the zeolite material is in contact with the hot water for a period of 1 hour or more.

FIG.1

FIG.2

FIG.3

FIG.4

FIG.5

FIG.6

FIG.7

FIG.8

FIG.9

FIG.10

Comparative Example 3 (after test (1050 °C))

Comparative Example 3
(after test (900 °C))

Comparative Example 3 (before test):
Reference

Intensity / a.u.

2 θ (CuKα) / degree

# FIG.11

Relative crystallinity (%)

Example 5

Example 6

Comparative
Example 3

Test temperature (°C)

# FIG.12

Example 7 (after test (1050 °C))

Example 7 (after test (900 °C))

Example 7 (before test)

Comparative Example 4 (before test)

2 θ (CuKα) / degree

# FIG.13

Example 8 (after test (1050 °C))

Example 8 (after test (900 °C))

Example 8 (before test)

Comparative Example 4 (before test)

2 θ (CuKα) / degree

# FIG.14

**FIG.15**

Test temperature (°C)

**FIG.16**

FIG.17(A)

FIG.17(B)

FIG.18

FIG.19

FIG.20

FIG.21

FIG.22

FIG.23

FIG.24

FIG.25

EP 3 896 036 A1

FIG.26

FIG.27(A)

FIG.27(B)

FIG.28

FIG.29

FIG.30

FIG.31

FIG.32

FIG.33

FIG.34

FIG.35

FIG.36(A)

FIG.36(B)

## INTERNATIONAL SEARCH REPORT

| International application No. |
| --- |
| PCT/JP2019/046334 |

**A. CLASSIFICATION OF SUBJECT MATTER**
Int.Cl. C01B39/48(2006.01)i
FI: C01B39/48

According to International Patent Classification (IPC) or to both national classification and IPC

**B. FIELDS SEARCHED**

Minimum documentation searched (classification system followed by classification symbols)
Int.Cl. C01B39/48

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2000-153159 A (TOSOH CORPORATION) 06.06.2000 (2000-06-06), paragraphs [0031], [0033], [0035], table 1 | 1-5, 7<br>6 |
| X<br>Y | JP 4-305010 A (TOSOH CORPORATION) 28.10.1992 (1992-10-28), examples 2, 3, table 2 | 2, 5, 7<br>6 |
| X<br>Y | JP 2011-148677 A (TOSOH CORPORATION) 04.08.2011 (2011-08-04), examples 1, 9, tables 2, 3 | 3, 5, 7<br>6 |
| X<br>Y | JP 64-5906 A (MOBIL OIL CORP.) 10.01.1989 (1989-01-10), claims, examples 1, 2 | 1-3, 5-11<br>6 |
| X | JP 8-91827 A (TOSOH CORPORATION) 09.04.1996 (1996-04-09), claims, paragraph [0022] | 1, 4-9, 12 |

☐ Further documents are listed in the continuation of Box C.       ☒ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>06.02.2020 | Date of mailing of the international search report<br>18.02.2020 |
| --- | --- |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

<div align="center">

**INTERNATIONAL SEARCH REPORT**
Information on patent family members

</div>

| International application No. |
| --- |
| PCT/JP2019/046334 |

```
JP 2000-153159 A      06.06.2000      (Family: none)

JP 4-305010 A         28.10.1992      (Family: none)

JP 2011-148677 A      04.08.2011      US 2012/0207669 A1
                                      examples 1, 8, tables 2, 3
                                      WO 2011/078149 A1
                                      EP 2518017 A1
                                      CN 102666387 A
                                      KR 10-2012-0106945 A

JP 64-5906 A          10.01.1989      US 4943545 A
                                      claims,
                                      examples 1, 2
                                      EP 295019 A1

JP 8-91827 A          09.04.1996      (Family: none)
```

Form PCT/ISA/210 (patent family annex) (January 2015)

**EP 3 896 036 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018233264 A
- JP 2019113138 A
- WO 2010016338 A

**Non-patent literature cited in the description**

- **M. A. CAMBLOR ; L. A. VILLAESCUSA ; M. J. DI-AZ-CABANAS.** *Top. Catal.,* 1999, vol. 9, 59-76
- Opening the Cages of Faujasite-Type Zeolite. *J. Am. Chem. Soc.,* 2017, vol. 139 (48), 17273-17276